# EUROPÄISCHE PATENTSCHRIFT

(11) **EP 1 910 433 B1**
(45) Veröffentlichungstag und Bekanntmachung des Hinweises auf die Patenterteilung: **05.11.2014**
(21) Anmeldenummer: 06754224.1
(22) Anmeldetag: 08.06.2006
(51) Int. Cl.: C08F 216/14

(54) **HYDROPHILES VERNETZTES POLYMER**
CROSSLINKED HYDROPHILE POLYMER
POLYMÈRE HYDROPHILE RÉTICULÉ

(30) Priorität: 02.06.2006 WO PCT/EP2006/005296; 03.08.2005 EP 05016846
(43) Veröffentlichungstag der Anmeldung: 16.04.2008
(73) Patentinhaber: Merck Patent GmbH, 64293 Darmstadt (DE)
(72) Erfinder: JOEHNCK, Matthias, 64283 Darmstadt (DE); SABROWSKI, Eckhard, 06862 Rosslau (DE)
(86) Internationale Anmeldenummer: PCT/EP2006/005484
(87) Internationale Veröffentlichungsnummer: WO 2007/014591

(56) Entgegenhaltungen:
- EP-A- 0 266 503
- EP-A- 0 337 144
- US-A- 5 599 702

## Beschreibung

Die vorliegende Erfindung betrifft ein hydrophiles vernetztes Polymer, bevorzugt in Form von porösen Teilchen, sowie dessen Herstellung und Verwendung. Das erfindungsgemäße Polymer wird durch Polymerisation aus kettenbildenden hydrophilen Vinylethern und vernetzenden N,N'-Divinyl-Verbindungen, bevorzugt heterocyclischen N,N'-Divinyl-Verbindungen, erzeugt.

Hydrophile, vernetzte polymere Trägermaterialien werden vielfach in Bereichen wie Chromatographie, Festphasensynthese oder Katalyse eingesetzt. Insbesondere für den Einsatz als Trägermaterial in der Chromatographie sollten derartige Polymere folgende Eigenschaften aufweisen:
- Die Materialien sollten ausreichend hydrophil sein, damit insbesondere ein Einsatz in der Biochromatographie möglich ist
- Die Materialien sollten bei Bedarf mit Separationseffektoren modifiziert werden können, damit ihre Trenneigenschaften an das jeweilige Trennproblem angepasst werden können
- Das Polymer muss ausreichend hydrolysestabil sein
- Insbesondere für Anwendungen im Bereich der Hochdruck-Flüssigkeitschromatographie muss das Material eine ausreichende Druck-Fluß-Stabilität aufweisen
- Die Materialien sollten ausreichende Porengrößen besitzen

Zudem sollten derartige Polymere möglichst einfach und reproduzierbar herzustellen sein.

WO 03/104294 offenbart Polyvinylether insbesondere zum Einsatz in der Festphasensynthese. Die offenbarten Polymere zeigen zumeist ein sehr starkes Quellverhalten.

DE 37 14 276 und DE 3344912 offenbaren vernetzte Polymere auf Basis von Vinylacetaten. Um ein hydrophiles Polymer zu erzeugen, müssen die Acetatgruppen nachträglich verseift werden.

WO 9513861 offenbart Polyvinylether für Separationszwecke welche durch kationische Polymerisation hergestellt werden. Die beschriebene kationische Polymerisation muss in Kombination mit einer aufwendigen Schutzgruppenchemie durchgeführt werden.

EP 0 266 503 offenbart vernetzte Polymerisate, die mittels Suspensionspolymerisation aus Epoxidgruppen-haltigen Monomeren hergestellt werden. Die entstehenden Epoxidgruppen-haltigen Polymere können dann für die Immobilisierung von biologisch aktiven Substanzen genutzt werden.

EP 0 482 339 offenbart ein Copolymer auf Basis von Allylmonomeren. Insbesondere das auf EP 0 482 339 basierende Copolymer aus 1,2,-Dihydroxy-3-allyloxy-propan und N, N'-Methylenbisacrylamid, kommerziell erhältlich unter dem Namen FractoPrep^{®} (Merck KGaA, Deutschland), zeigt bezüglich Hydrophilie, Hydrolysestabilität und Druck-Fluß-Stabilität für die Biochromatographie gute Eigenschaften. Nachteil dieses Materials ist jedoch das aufwendige Herstellverfahren mittels inverser Suspensionspolymerisation.

Aufgabe der vorliegenden Erfindung war es daher, ein hydrophiles polymeres Trägermaterial bereitzustellen, das die vorgenannten Anforderungen bezüglich Porosität, Hydrophilie, Hydrolysestabilität und Druck-Fluß-Stabilität erfüllt und zudem einfach herzustellen ist.

Es wurde gefunden, dass durch Copolymerisation von hydrophil substituierten Alkylvinylethern mit vernetzenden bevorzugt heterocyclischen N,N'-Divinyl-Verbindungen hydrophile Polymere mit guten Eigenschaften insbesondere für die Biochromatographie hergestellt werden können. Die Polymere werden bevorzugt mittels Suspensionspolymerisation hergestellt.

Gegenstand der vorliegenden Erfindung ist daher ein hydrophiles vernetztes Polymer auf Basis eines Copolymers zumindest aus
a) mindestens einem hydrophil substituierten Alkylvinylether der Formel I 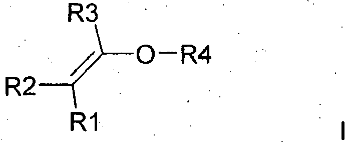 wobei R1, R2, R3 unabhängig voneinander H oder C1 bis C6 Alkyl, bevorzugt H oder -CH₃ sein können
   und R4 ein Rest ist, der zumindest eine Hydroxylgruppe trägt und
b)
   mindestens einem Vernetzer entsprechend Formel II und/oder III und/oder IV, mit 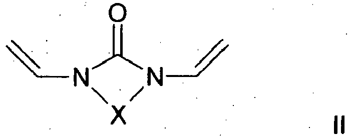 wobei X ein zweiwertiger Alkylrest mit 2 bis 5 C-Atomen, bevorzugt 2 oder 3 C-Atomen, ist, bei dem ein oder mehrere nicht benachbarte und nicht in direkter Nachbarschaft von N befindliche Methylengruppen durch O, C=O, S, S=O, SO₂, NH, NOH oder N ersetzt sein können und ein oder mehrere H-Atome der Methylengruppen unabhängig voneinander durch Hydroxylgruppen, C1-C6-Alkyl, Halogen, NH₂, C5-C10-Aryl, NH-(C1-C8)-Alkyl, N-(C1-C8)-Alkyl₂, C1-C6-Alkoxy oder C1-C6-Alkyl-OH substituiert sein können, und 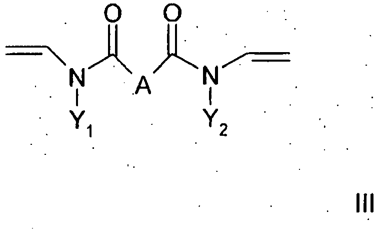 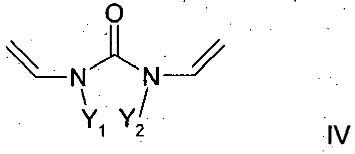 wobei Y1 und Y2 in Formel III und IV unabhängig voneinander
   C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können,
   oder C6 bis C18 Aryl sind, wobei ein oder mehrere H in dem Arylsystem unabhängig voneinander durch Hydroxygruppen, C1-C6-Alkyl, Halogen, NH2, NH(C1-C8)Alkyl, N(C1-C8)Alkyli, C1-C6-Alkoxy oder C1-C6-Alkyl-OH substituiert sein können und
   A ein zweiwertiger Alkylrest mit 2 bis 5 C-Atomen, bevorzugt 2 oder 3 C-Atomen, ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

Typischerweise ist R4 in Formel I ein Alkyl-Rest, ein cycloaliphatischer Rest oder ein Aryl-Rest, der zumindest eine Hydroxylgruppe trägt.

In einer bevorzugten Ausführungsform ist R4 in Formel I
ein geradkettiger oder verzweigter C1 bis C10 Alkylrest, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest , wobei ein oder mehrere H-Atome in dem Aryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

In einer besonders bevorzugten Ausführungsform ist R4 in Formel I ein geradkettiger oder verzweigter C1 bis C10 Alkylrest, bei dem ein oder mehrere nicht benachbarte Methylengruppen durch O, S, SO₂ oder NH ersetzt sein können und/oder bei dem ein oder mehrere H-Atome unabhängig voneinander durch C1-C6-Alkyl, C5-C10-Aryl, C1-C6-Alkoxy oder C1-C6-Alkyl-OH substituiert seih können und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, S, SO₂ oder NH ersetzt sein können und/oder bei dem ein oder mehrere H-Atome des cycloaliphatischen Restes unabhängig voneinander durch C1-C6-Alkyl, C5-C10-Aryl, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C14 Aryl-Rest, wobei ein oder mehrere H-Atome in dem Aryl-Rest unabhängig voneinander durch Hydroxygruppen, C1-C6-Alkyl, C5-C10-Aryl, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein C6 bis C14 Heteroaryl-Rest, in dem als Heteroatom mindestens ein N-Atom vorhanden ist und wobei ein oder mehrere H-Atome in dem Heteroaryl-Rest unabhängig voneinander durch Hydroxygruppen, C1-C6-Alkyl, C5-C10-Aryl, C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

In einer bevorzugten Ausführungsform wird als hydrophil substituierter Alkylvinylether eine Verbindung der Formel eingesetzt, in der R4 ein Rest ist, der eine Hydroxylgruppe trägt.

In einer besonders bevorzugten Ausführungsform wird als hydrophil substituierter Alkylvinylether 1,2-Ethandiolmonovinylether, 1,3-Propandiolmonovinylether, 1,4-Butandiolmonovinylether, 1,5-Pentandiolmonovinylether, 1,6-Hexandiolmonovinylether oder Diethylenglykolmonovinylether und als cycloaliphatischer Vinylether Cyclohexandimethanolmonovinylether eingesetzt.

In einer weiteren bevorzugten Ausführungsform wird als Vernetzer Divinylethylenharnstoff (1,3-Divinylimidazolin-2-on) oder Divinylpropylenharnstoff (1,3-Divinyl-tetrahydropyrimidin-2-on) eingesetzt.

In einer anderen bevorzugten Ausführungsform ist das Polymer porös mit Porengrößen zwischen 2 und 200 nm.

In einer anderen Ausführungsform liegt das Polymer in Form von Partikeln mit einem Durchmesser zwischen 3 und 300 µm vor.

In einer anderen Ausführungsform ist das Polymer mit Separationseffektoren derivatisiert.

In einer bevorzugten Ausführungsform ist das Polymer mit Strukturen derivatisiert, die durch Pfropfpolymerisation auf das Polymer aufgebracht wurden.

In einer bevorzugten Ausführungsform ist das Polymer mit Strukturen derivatisiert, die durch Pfropfpolymerisation unter Cer(IV)-Katalyse auf das Polymer aufgebracht wurden.

In einer besonders bevorzugten Ausführungsform sind die Strukturen Copolymerisate, die aus zwei oder mehreren unterschiedlichen Monomeren erzeugt wurden.

Gegenstand der vorliegenden Erfindung ist auch ein Verfahren zur Herstellung von Polymeren, dadurch gekennzeichnet, dass zumindest ein hydrophil substituierter Alkylvinylether der Formel I und zumindest ein Vernetzer entsprechend Formel II und/oder III und/oder IV copolymerisiert werden, mit 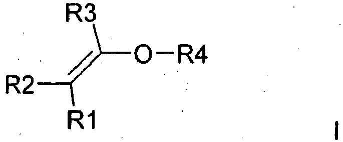 wobei R1, R2, R3 unabhängig voneinander H oder C1 bis C6 Alkyl, bevorzugt H oder -CH₃ sein können
und R4 ein Rest ist, der zumindest eine Hydroxylgruppe trägt und 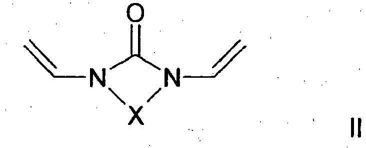 wobei X ein zweiwertiger Alkylrest mit 2 bis 5 C-Atomen, bevorzugt 2 oder 3 C-Atomen, ist, bei dem ein oder mehrere nicht benachbarte und nicht in direkter Nachbarschaft von N befindliche Methylengruppen durch O, C=O, S, S=O, SO₂, NH, NOH oder N ersetzt sein können und ein oder mehrere H-Atome der Methylengruppen unabhängig voneinander durch Hydroxylgruppen, C1-C6-Alkyl, Halogen, NH₂, C5-C10-Aryl, NH-C1-C8-Alkyl, N-C1-C8-Alkyl₂, C1-C6-Alkoxy oder C1-C6-Alkyl-OH substituiert sein können, und 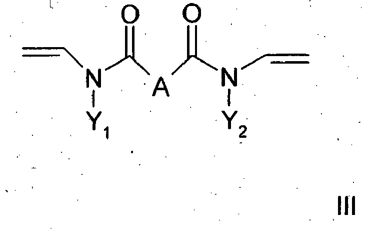 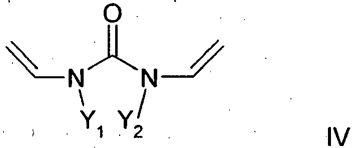 wobei Y1 und Y2 in Formel III und IV unabhängig voneinander
C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können,
oder C6 bis C18 Aryl sind, wobei ein oder mehrere H in dem Arylsystem unabhängig voneinander durch Hydroxygruppen, C1-C6-Alkyl, Halogen, NH₂, NH(C1-C8)Alkyl, N(C1-C8)Alkyl₂, C1-C6-Alkoxy oder C1-C6-Alkyl-OH substituiert sein können und
A ein zweiwertiger Alkylrest mit 2 bis 5 C-Atomen, bevorzugt 2 oder 3 C-Atomen, ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

In einer bevorzugten Ausführungsform ist R4 in Formel I
ein geradkettiger oder verzweigter C1 bis C10 Alkylrest, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein kann und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest, wobei ein oder mehrere H-Atome in dem Aryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

In einer bevorzugten Ausführungsform wird eine radikalische Suspensionspolymerisation durchgeführt.

In einer besonders bevorzugten Ausführungsform wird eine radikalische Suspensionspolymerisation in Wasser als Suspensionsmittel in Gegenwart von mindestens einem Suspensionsstabilisator und optionalen weiteren Zusätzen, bevorzugt anorganischen Salzen und grenzflächenaktiven Verbindungen durchgeführt.

In einer Ausführungsform liegt die Temperatur während der Polymerisation zwischen 40 und 100°C.

In einer bevorzugten Ausführungsform werden hydrophil substituierte Alkylvinylether und Vernetzer in einem Massenverhältnis zwischen 10:90 und 80:20 eingesetzt.

In einer bevorzugten Ausführungsform erfolgt die Polymerisation unter Zusatz eines oder mehrerer Porogene.

Gegenstand der vorliegenden Erfindung ist auch eine Chromatographiesäule, Kapillare, Kartusche, ein Rührkessel oder ein Reaktor enthaltend ein erfindungsgemäßes Polymer als Sorbens oder Trägermaterial.

Gegenstand der vorliegenden Erfindung ist auch die Verwendung eines erfindungsgemäßen hydrophilen vernetzten Polymers als Sorbens in der Chromatographie, als Trägermaterial zur Immobilisierung biologisch oder katalytisch aktiver Substanzen oder als Trägermaterial für eine Festphasensynthese.

Gegenstand der vorliegenden Erfindung sind auch Polymere erhältlich durch das erfindungsgemäße Verfahren.

Weitere Kombinationen und bevorzugte Ausführungsformen sind in den Patentansprüchen offenbart.

Abbildung 1 zeigt das Retentionsverhalten des erfindungsgemäßen Polymers bei Aufgabe von Proteinen. Nähere Angaben finden sich in Beispiel 2.

Abbildung 2 zeigt die experimentell bestimmten Verteilungskoeffizienten Kd von Dextranen mit unterschiedlichen Molekulargewichten. Nähere Angaben finden sich in Beispiel 3.

Abbildung 3 zeigt die Lagerstabilität eines erfindungsgemäßen Polymers in verdünnter Natronlauge. Nähere Angaben finden sich in Beispiel 4.

Abbildung 4 zeigt die Trennung eines Proteingemisches auf einem mit kationischen Separationseffektoren versehenen erfindungsgemäßen Polymer. Nähere Angaben finden sich in Beispiel 5.

Abbildung 5 zeigt das Druck-Fluß Verhalten des erfindungsgemäßen Polymers in einer Chromatographiesäule.

Erfindungsgemäß bedeutet der Begriff "cycloaliphatischer Rest" einen gesättigten Kohlenwasserstoff-Rest, bei dem alle oder zumindest ein Teil der Kohlenwasserstoff-Einheiten Bestandteil einer cyclischen Struktur sind.

Erfindungsgemäß bedeutet N(C1-C8)Alkyl₂ einen zumindest mit zwei Alkyl-Resten substituierten Stickstoff. Die beiden Alkylreste können dabei unabhängig voneinander 1 bis 8 C-Atome in geradkettiger oder verzweigter Form aufweisen.

Erfindungsgemäß ist ein Heteroaryl-Rest ein zumindest partiell aromatischer Rest, der sich von einem Aryl-Rest darin unterscheidet, dass ein oder mehrere nicht benachbarte C-Atome durch N, S oder O ersetzt sind. Dem Fachmann ist klar, dass aufgrund der Valenzen die Heteroatome gegebenenfalls mit z.B. H, C1-C6-Alkyl oder C1-C6-Alkyl-OH substituiert sein können.

Das erfindungsgemäße Polymer ist ein hydrophiles, vernetztes Polymer auf Basis eines Copolymers zumindest aus
a) mindestens einem hydrophil substituierten Alkylvinylether der Formel I 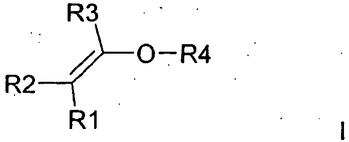 wobei die Reste R1, R2, R3 und R4 die vorgenannten Bedeutungen haben, und
b)
   mindestens einem Vernetzer entsprechend Formel II und/oder III und/oder IV 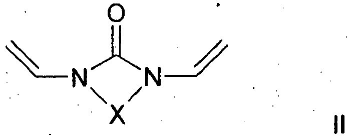 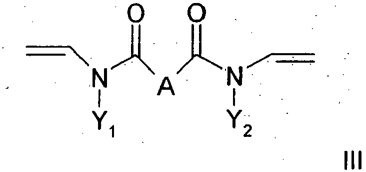 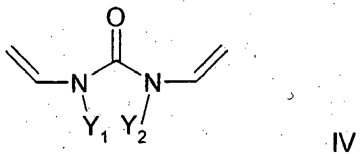 wobei die Substituenten X, A, Y1 und Y2 die vorgenannten Bedeutungen haben.

Das bedeutet, das Polymer entsteht durch Copolymerisation von zumindest einer Verbindung aus der Gruppe der hydrophil substituierten Alkylvinylether gemäß Formel I und zumindest einer Verbindung aus der Gruppe der Vernetzer gemäß Formel II und/oder III und/oder IV. Bevorzugt wird nur eine Verbindung aus der Gruppe der hydrophil substituierten Alkylvinylether gemäß Formel I und eine Verbindung aus der Gruppe der Vernetzer gemäß Formel II, III oder IV eingesetzt. Es können aber auch ein oder mehrere Verbindungen aus der Gruppe der hydrophil substituierten Alkylvinylether der Formel I und/oder ein oder mehrere Verbindungen aus der Gruppe der Vernetzer gemäß Formel II und/oder III und/oder IV eingesetzt werden. Weiterhin können dem Polymerisationsgemisch weitere polymerisierbare Verbindungen zugesetzt werden, die mit in das Polymergerüst einpolymerisert werden. Typischerweise sind dies Verbindungen mit mindestens einer polymerisierbaren Doppelbindung.

Bevorzugt wird nur eine Verbindung aus der Gruppe der hydrophil substituierten Alkylvinylether gemäß Formel I und eine Verbindung aus der Gruppe der Vernetzer gemäß Formel II, III oder IV eingesetzt.

In einer bevorzugten Ausführungsform wird als hydrophil substituierter Alkylvinylether eine Verbindung gemäß Formel I eingesetzt, in der R4 ein Rest ist, der eine Hydroxylgruppe trägt.

In einer bevorzugten Ausführungsform wird als hydrophil substituierter Alkylvinylether 1,2-Ethandiolmonovinylether, 1,3-Propandiolmonovinylether, 1,4-Butandiolmonovinylether, 1,5-Pentandiolmonovinylether, 1,8-Hexandiolmonovinylether oder Diethylenglycolmonovinylether und als cycloaliphatischer Vinylether Cyclohexandimethanolmonovinylether eingesetzt, besonders bevorzugt 1,4-Butandiolmonovinylether, 1,5-Pentandiolmonovinylether, Diethylenglycolmonovinylether oder Cyclohexandimethanolmonovinylether.

Als Vernetzer werden bevorzugt Verbindungen der Formel II eingesetzt. Bevorzugt wird Divinylpropylenharnstoff (1,3-Divinyl-tetrahydropyrimidin-2-on) oder besonders bevorzugt Divinylethylenharnstoff (1,3-Divinylimidazolin-2-on) eingesetzt.

Der Anteil der hydrophil substituierten Alkylvinylether am Gewicht des Polymeren liegt typischerweise zwischen 1 (Gewichts) % und 90 (Gewichts)% oder einem maximalen Gewichtsanteil des Alkylvinylethers, der einem Molverhältnis von 2:1 bezogen auf einen bifunktionellen Vernetzer entspricht, falls der Alkylvinylether nicht homopolymerisiert. Bevorzugt liegt der Anteil der hydrophil substituierten Alkylvinylether zwischen 10 und 80% (Gew%), besonders bevorzugt zwischen 35 und 60%. Dementsprechend liegt der Anteil des Vernetzers zwischen 10 und 99 (Gew%), bevorzugt zwischen 20 und 90%, besonders bevorzugt zwischen 40 und 65%.

Die verfahrenstechnische Ausführung der Copolymerisation von ungesättigten Verbindungen ist dem Fachmann bekannt. Dazu wird eine radikalische Polymerisation durchgeführt. Bevorzugt wird eine durch Radikale initiierte Suspensionspolymerisation, auch Perlpolymerisation genannt, durchgeführt. Beschreibungen wie eine solche Polymerisation durchgeführt wird finden sich beispielsweise in EP 1179732 A2 (allgemeine Beschreibung Seite 4, Zeilen 18 bis 26, und Seite 5, Zeile 3 bis Seite 6, Zeile 9, sowie insbesondere Beispiel 1) oder in EP 0006199 B1 (allgemeine Beschreibung Seite 3, Zeile 19 bis Seite 4, Zeile 13, sowie insbesondere Beispiel 1). Je nach Lösungsverhalten der Monomere wird bei in Wasser unlöslichen oder wenig löslichen Monomeren, die auch als Öl bezeichnet werden, in besonders einfacher Ausführung eine Öl in Wasser Suspensionspolymerisation (Normalphasenpolymerisation) durchführt. Bei in Wasser löslichen Monomeren werden hingegen diese in Wasser gelöst und in einem nicht bzw. nur wenig mit Wasser mischbaren organischen Lösungsmittel suspendiert und polymerisiert (Inverse Polymerisation).

Es wurde gefunden, dass insbesondere bei Einsatz von Divinylethylenharnstoff oder Divinylpropylenharnstoff in Kombination mit den bevorzugten hydrophil substituierten Alkylvinylethern, wie 1,4-Butandiolmonovinylether, 1,5-Pentandiolmonovinylether, Diethylenglycolmonovinylether oder Cyclohexandimethanolmonovinylether, eine (Normalphasen-) Suspensionspolymerisation durchgeführt werden kann. Das bietet den Vorteil eines sehr einfachen Herstellverfahrens für die erfindungsgemäßen Polymere, da man in einem einzigen Reaktionsschritt das hydrophile Polymer erhält, ohne die aufwendige inverse Suspensionspolymerisation durchführen zu müssen. Ein weiterer großer Vorteil der erfindungsgemäß eingesetzten hydrophil substituierten Alkylvinylether ist, dass kein nachträglicher Hydrolyseschritt durchgeführt werden muss, um ein hydrophiles Polymer zu erzeugen. Vielmehr entsteht durch den Einsatz der Hydroxylgruppen-haltigen Vinylether als Edukte direkt ein Hydroxylgruppen-haltiges Polymer.

Die Suspensionspolymerisation wird auf bekannte Weise durchgeführt. Als Suspensionsmittel wird in der Normalphasen-Suspensionspolymerisation typischerweise Wasser verwendet.

Dem Suspensionsmittel können bekannterweise ein oder mehrere Stabilisatoren und/oder ein oder mehrere grenzflächenaktive Verbindungen zugesetzt werden.

Als Stabilisatoren können eine Vielzahl von wasserlöslichen makromolekularen Verbindungen oder auch feinverteilte anorganische Verbindungen eingesetzt werden.

Beispiele für makromolekulare Stabilisatoren sind Polyvinylpyrölidon, Polyacrylate, Polycarboxylate, Polyacrylamid, Polyvinylalkohol, Hydroxyalkylcellulose, Methylcellulose oder Polyethylenglykole. Bevorzugt werden Polyvinylalkohole eingesetzt.

Als anorganische Verbindungen können z. B. Calciumphosphat oder Magnesiumhydroxyd als Stabilisatoren eingesetzt werden.

Weiterhin können der wässerigen Phase Salze, ionische Flüssigkeiten oder Puffersubstanzen wie z. B. Na₂HPO₄ und NaH₂PO₄ zugesetzt werden.

Geeignete grenzflächenaktive Verbindungen sind insbesondere anionische und nichtionische Tenside wie Ethoxylate langkettiger Alkohole, ethoxilierte Mono-, Di- und Trialkylphenole, Alkali- und Ammoniumsalze von C₁₂ - C₁₈ Alkylsulfonsäuren oder Arylsulfonsäuren.

Für die Durchführung der erfindungsgemäßen Polymerisation wird die organische Phase, auch Ölphase genannt, in der wässerigen Phase suspendiert. Nach Initiation und Durchführung der Polymerisation kann das Polymer typischerweise abfiltriert werden oder auf andere Weise aus dem Reaktionsgemisch entfernt werden. Rückstände von Lösungsmitteln oder anderen Zusätzen können durch Waschen mit geeigneten Lösungsmitteln oder z.B. Wasserdampfdestillation entfernt werden.

Die Ölphase enthält in einer Ausführungsform neben den Monomeren inerte Lösungsmittel (Porogene), um die gewünschten Porengrößen einzustellen.

Geeignete organische Lösungsmittel (Porogene) sind z. B. aliphatische Kohlenwasserstoffe (C₆ - C₁₈), wie z. B. Hexan, Dodecan oder Benzingemische, cycloaliphatische Verbindungen wie Cyclohexan, aromatische Kohlenwasserstoffe wie Toluol, Ethylbenzole oder Xylole oder Alkohole wie aliphatische C₄ - C₁₂-Alkohole z. B. Heptanol, Dodecanol, Cyclohexanol, Polyethylenglykole oder Polypropylenglykole mit unterschiedlicher Molmasse oder Ester aliphatischer Carbonsäuren wie Butylacetat oder Propylpropionat oder Ester aromatischer Carbonsäuren wie Propylbenzoat oder Ester wie Butylglykolacetat oder Glycerintriacetat oder Ether wie Di-n-Butylether, Di-n-amylether, Diphenylether, Ethylenglykolmonophenylether und Ethylenglykoldiethylether.

Diese Lösungsmittel können einzeln oder als Gemisch zweier oder : mehrerer Lösungsmittel eingesetzt werden. Sie können entweder als Quell- oder Fällmittel für die Polymere wirken und auf diese Weise die Porosität beeinflussen.

Beispiele für Quellmittel bei den erfindungsgemäßen Polymeren sind niedere Alkohole, aliphatische Ester oder aromatische Kohlenwasserstoffe wie Toluol.

Beispiele für Fällmittel sind aliphatische Kohlenwasserstoffe wie Dodecan oder Benzingemische. Durch Art und Menge der Lösungsmittel in Verbindung mit dem Vernetzungsgrad des Polymeren kann die Porosität der Polymere festgelegt werden.

Weiterhin werden der organischen Phase typischerweise ein oder mehrere radikalisch wirkende Initiatoren zugefügt.

beispiele für radikalische Initiatoren sind organische Peroxide, wie Di-tert-butylperoxid, Dibenzoylperoxid, Bis(o-methylbenzoyl)peroxid, tert.-Butylhydroperoxid, Cumolhydroperoxid, Di-iso-propylperoxiddicarbonat, Cyclohexanonperoxid, oder aliphatische Azoverbindungen wie α, α'-Azo-diisobuttersäurenitril, Azobis-cyanvaleriansäure, 1,1'-Azo-cyklohexan-1,1'-dicarbonsäurenitril oder Azodicarbonamid. Bevorzugt ist α, α'-Azo-diisobuttersäurenitril.

Auch mittels Strahlung, z. B. UV-Strahlung, aktivierbare Initiatoren können erfindungsgemäß als radikalische Initiatoren eingesetzt werden.

Die Phasenverhältnisse bei der Suspensionspolymerisation können typischerweise im Volumenverhältnis zwischen 1:20 (Ölphase zu wässriger Phase) und 2:1 variiert werden, bevorzugt sind Verhältnisse zwischen 1:5 und 1:1, besonders bevorzugt zwischen 1:3 und 1:1.

Das Verhältnis von organischem Lösungsmittel zu Monomer beträgt typischerweise zwischen 1:20 und 4:1, bevorzugt zwischen 1:5 und 3:1, besonders bevorzugt zwischen 1:1 und 2,5:1.

Die Konzentration des Initiators bezogen auf die Menge an Monomer beträgt typischerweise zwischen 0,01 (Gewichts)% und 10 (Gewichts)%, bevorzugt zwischen 0,1 und 7 (Gewichts)% und besonders bevorzugt zwischen 0,2 und 7 (Gewichts)%.

Die Konzentration von Stabilisatoren bezogen auf die Menge an Suspendiermittel, in der Regel Wasser, beträgt zwischen 0,01 und 7 (Gewichts)%, typischerweise zwischen 0,02 und 5 (Gewichts)%, besonders bevorzugt zwischen 0,05 und 2,5 (Gewichts)%.

Die Suspensionspolymerisation wird dann durchgeführt, indem die beiden Phasen unter starkem Rühren gemischt werden. Zusätzlich wird typischerweise für eine Dauer von 1 bis 20 Stunden auf 20 bis 100°C, bevorzugt 40 bis 100°C temperiert. Typischerweise wird über einen Zeitraum von 0,5 bis 5 Stunden auf 40 bis 100°C erhitzt und anschließend nochmals mehrere Stunden bei 70 bis 100°C nachpolymerisiert. Während der ganzen Zeit sollte gerührt werden. Diese Temperaturangaben beziehen sich auf ein System, in dem Wasser als Suspensionsmittel verwendet wird. Bei Einsatz anderer polarer Lösungsmittel anstelle von Wasser können je nach Siedepunkt des Lösungsmittels andere Temperaturbereiche möglich bzw. sinnvoll sein.

In der Regel ist es vorteilhaft, die erfindungsgemäße Polymerisation in Schutzgasatmosphäre durchzuführen.

Abschließend wird in der Regel auf Raumtemperatur abgekühlt, die organischen Lösungsmittel entfernt, sofern diese bei der Polymerisation zugesetzt wurden, und das Produkt in Wasser, einem wässrigen Puffer oder einem Gemisch von Wasser mit einem organischen Lösungsmittel wie Ethanol gelagert.

Falls erforderlich, kann das Polymer durch Siebung oder eine andere Art der Klassierung in die gewünschte Korngrößenverteilung gebracht werden.

Soll statt der Normalphasen-Suspensionspolymerisation eine inverse Suspensionspolymerisation oder eine Emulsionspolymerisation durchgeführt werden, so ist dem Fachmann bekannt, in welcher Weise die Zusammensetzung der Reaktionslösungen zu verändern ist.

Ebenso kann die erfindungsgemäße Polymerisation kontinuierlich erfolgen. Besonders bevorzugt werden dabei zur Partikelerzeugung statische Mischer, insbesondere Mikromischer oder Raupenmischer, eingesetzt. In diesen Mischern wird unter Ausnutzung der Strömungsenergie die räumliche Verteilung zweier zu mischender Komponenten durch die Strömungsführung, z.B. durch Trennen und Wiedervereinigen, Verdrehen, Verzerren und Aufweiten so beeinflusst, dass große Grenzflächen für den diffusiven Austausch zwischen den Komponenten entstehen und durch die hohen Scherkräfte eine besonders einheitliche Korngrößenverteilung erzielt werden kann. Verschiedene Mischer und ihr Aufbau sind bekannt. Beispielsweise sind solche Systeme beschrieben in EP 1177243.

Zur Durchführung der Reaktionen wird z. B. der Mikromischer mit der wässrigen Phase kontinuierlich mit definiertem Volumenstrom durchströmt. Anschließend wird die Ölphase über die zweite Zuführung, ebenfalls mit definiertem, genau eingestelltem Volumenstrom eingespeist. Das Verhältnis der beiden Volumenströme kann in einem breiten Bereich liegen und richtet sich nach der gewünschten Teilchengröße, der Art und Verteilung der Teilchengrößen, der Viskosität der wässrigen und der Ölphase abhängig von der Reaktionstemperatur sowie der Reaktionskinetik und dem notwendigen Verhältnis der Porogene in der Endmischung zur Erzielung einer geeigneten Porenstruktur. Vorzugsweise liegt das Volumenstromverhältnis zwischen wässriger Phase und Ölphase bei 1:10 bis 100:1, insbesondere bei 2:1 bis 20:1. Bevorzugt wird die aus dem statischen Mischer austretende Suspension in einem kontinuierlich arbeitenden Reaktor polymerisiert.

Ebenso ist es möglich, die oben beschriebene Vorgehensweise umzukehren. Beispielsweise zur Polymerisation von besonders hydrophilen Monomeren werden diese über die wässrige Phase zugeführt. Nähere Einzelheiten zur Synthese von Perlpolymerisaten mithilfe von Mikromischern finden sich in EP 1177243.

Dem Fachmann ist weiterhin bekannt, wie unter anderem durch die Art und Menge des Zusatzes an Suspensionsstabilisatoren und grenzflächenaktiven Verbindungen sowie die Rührintensität Einfluss auf die Partikelgröße des entstehenden Polymers genommen werden kann. In der Regel können mittels Suspensionspolymerisation je nach Art des Rührwerks und der Drehzahl Partikeldurchmesser zwischen 3 µm und 500 µm, bevorzugt zwischen 3 µm und 300 µm erzeugt werden. Die Partikel können unregelmässig geformt oder bevorzugt sphärisch sein.

Werden die erfindungsgemäßen Polymere mittels Emulsionspolymerisation hergestellt, so können z.B. Partikeldurchmesser zwischen 20 nm und 3000 nm, bevorzugt zwischen 100 und 500 nm erzeugt werden.

Die erfindungsgemäßen Polymere können weiterhin in Form von Membranen, Fasern, Hohlfasern, Beschichtung oder als monolithischer Formkörper hergestellt werden oder vorliegen. Monolithische Formkörper sind dreidimensionale Körper, z.B. in zylindrischer Form.

Gleichermassen können die erfindungsgemäßen Polymere als Kompositmaterialien eingesetzt werden, d.h. beispielsweise als Beschichtung z.B. anorganischer Partikel oder Formkörper, oder im Gemisch mit z.B. anorganischen Bestandteilen. Ein Beispiel hierfür sind Partikel aus dem erfindungsgemäßen Polymer, die durch Einpolymerisierung magnetisierbarer Teilchen oder eines magnetisierbaren Kerns selbst magnetisierbar sind.

Die erfindungsgemäßen Polymere liegen bevorzugt als unporöse oder besonders bevorzugt poröse Partikel vor. Die Porengrößen können je nach Art und Menge des eingesetzten porogenen Lösungsmittels typischerweise zwischen 2 und 300 nm liegen. Porengröße bedeutet dabei erfindungsgemäß Porenradius. Bevorzugt sind Porengrößen bzw. Porenradien zwischen 2 und 200 nm. Insbesondere, wenn die erfindungsgemäßen Polymere als monolithische Formkörper vorliegen, können sie auch Porengrößen bis zu 1000 nm aufweisen.

Die Porenverteilung in den erfindungsgemäßen Materialien kann mono-, bi- oder oligomodalsein, bevorzugt mono- oder bimodal.

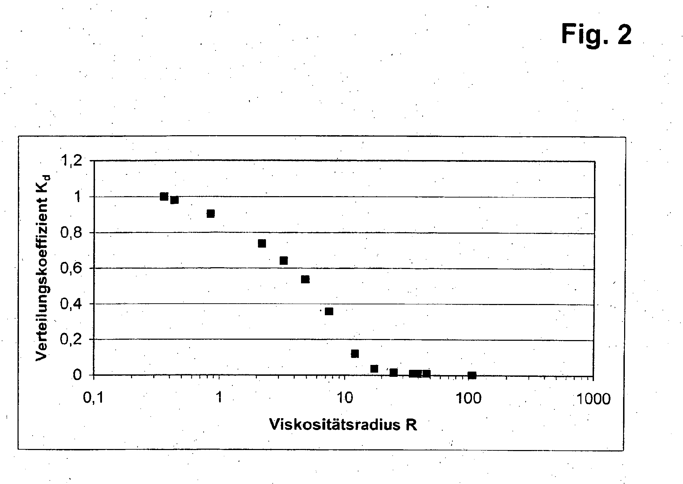

Die Messung der Porengrößen erfolgt bevorzugt mittels Größenausschluß-Chromatographie (SEC). Ein Messbeispiel hierzu findet sich in Beispiel 3 bzw. Abbildung 2.

Die erfindungsgemäßen hydrophilen, quervernetzten Polymere eignen sich insbesondere als Sorbenzien in der Chromatographie, als Trägermaterialien zur Immobilisierung von biologisch und/oder katalytisch wirksamen Stoffen oder als Trägermaterialien für Festphasensynthesen von z.B. Biopolymeren wie Nukleinsäuren oder Peptiden oder für die kombinatorische Chemie.

Die erfindungsgemäßen Materialien zeichnen sich durch eine gute Hydrolysestabilität, insbesondere in basischem Medium, aus sowie durch eine gute Druck-Fluß-Stabilität. Weiterhin sind sie aufgrund ihrer großen Hydrophilie insbesondere für biochromatographische Verfahren geeignet.

In den Beispielen finden sich zusätzlich experimentelle Daten zu diesen Eigenschaften.

Besonders geeignet sind die erfindungsgemäßen Polymere als Sorbenzien. Zu diesem Zweck werden sie in bekannter Weise in Chromatographiesäulen oder Kapillaren gefüllt. Genauso kann das erfindungsgemäße Polymer für chromatographische oder andere Zwecke in Kartuschen gepackt werden. Gegenstand der vorliegenden Erfindung sind daher auch Chromatographiesäulen, Kapillaren oder Kartuschen, die ein erfindungsgemäßes Polymer als Sorbens oder Trägermaterial enthalten.

Die erfindungsgemäßen Polymere können in ihrer nativen Form, d.h. ohne weitere Derivatisierungsschritte eingesetzt werden z.B. in Abhängigkeit der eingestellten Porosität für die Größenausschtußchromatographie (SEC) oder zur Reduktion des Salzgehaltes von Lösungen, wenn diese Lösungen Zielmoleküle enthalten, deren Molekulargewicht sich signifikant von dem Molekulargewicht des Salzes unterscheidet,
oder durch einen oder mehrere Derivatisierungsschritte mit anderen oder zusätzlichen Funktionalitäten versehen werden. Insbesondere können sie mit Separationseffektoren derivatisiert werden. Diese Separationseffektoren können sowohl ionisch oder neutral sein oder eine bevorzugte Affinität bzw. Selektivität für ein oder mehrere Zielmoleküle aufweisen.

Die kovalente Anbindung der Separationseffektoren erfolgt in der Regel über die auf dem Polymer vorhandenen funktionellen Gruppen, wie z.B. Hydroxylgruppen, z.B. unter Ausbildung einer Ester- oder bevorzugt einer Ether-Funktion, direkt oder über einen Linker bzw. Abstandshalter. In einer anderen bevorzugten Ausführungsform erfolgt die Verknüpfung mit dem Basismaterial über Propfpolymerisation, wie z.B. eine Cer(IV)-katalysierte Pfropfpolymerisation unter Ausbildung einer C-C-Verknüpfung mit dem Basismaterial.

Separationseffektoren sind dem Fachmann auf dem Gebiet der Chromatographie bekannt. Separationseffektoren sind Substituenten, die bereits während der Synthese des Basismaterials oder nachträglich in das Trägermaterial eingeführt werden können und die Einfluss auf die Oberflächeneigenschaften des Trägermaterials nehmen. Insbesondere werden durch die gezielte Derivatisierung von Trägermaterialien mit Separationseffektoren Trägermaterialien mit bestimmten chromatographischen Eigenschaften erzeugt. Insbesondere können Separationseffektoren folgende endständige Gruppen aufweisen:
a) eine ionische oder ionisierbare Gruppe, z.B.
   -NR⁷R⁸ oder -N+R⁷R⁸R⁹,
   worin
   - R⁷ und R⁸: unabhängig voneinander
   H, Alkyl mit 1-5 C-Atomen
   und
   - R₉: Alkyl mit 1-5 C-Atomen
   mit der Maßgabe, dass wenn X = -N+R⁷R⁸R⁹, R⁷ und R⁸ nicht H sein können,
   - Guanidinium
   - SO₃⁻
   - Carbonsäuren
b) eine hydrophobe Gruppierung, z.B. -OR¹⁰ oder -NHR¹⁰, wobei R¹⁰ C₁-C₂₀-Alkyl, C₆-C₂₅-Aryl, C₇-C₂₅-Alkylaryl oder C₇-C₂₅-Arylalkyl bedeuten, und wobei diese Reste auch mit Nitril oder C₁-C₅-Alkoxy derivatisiert sein können, und wobei auch eine oder mehrere nicht benachbarte CH₂-Gruppen durch NH oder O oder auch eine oder mehrere CH Gruppen durch N ersetzt sein können;
c) eine Metallchelat-Gruppierung;
d) ein thiophiler Rest;
e) ein chiraler Rest.
f) Biomoleküle, wie Proteine (z.B. Antikörper, Protein A), Peptide, Aminosäuren, Nukleinsäuren, Saccharide, Biotin etc.
g) organische Reste welche eine erhöhte Affinität bzw. Selektivität gegenüber bestimmten Zielmolekülen aufweisen (z.B. Mono- oder Bis-Triazin basierte Separationseffektoren gemäß WO 9710887 und WO 04/052870).

Thiophile Reste sind beispielsweise in EP 0 165 912 offenbart.

Soll das Polymer zunächst mit einem universellen Linker versehen werden, kann es z.B. zur Einführung von Epoxy-Gruppen mit Glycidylverbindungen wie Butandioldiglycidylether umgesetzt werden.

Weiterhin kann das erfindungsgemäße Polymer als Basismaterial durch Pfropfpolymerisation mit tentakelartigen Strukturen versehen werden, die wiederum die entsprechenden Separationseffektoren tragen oder mit diesen funktionalisiert werden können. Bevorzugt wird die Pfropfung gemäß EP 0 337 144 durchgeführt. Die erzeugte Kette ist über eine Monomereinheit mit dem Basismaterial verknüpft. Dazu wird das erfindungsgemäße Basismaterial in einer Lösung von Monomeren suspendiert, vorzugsweise in einer wässrigen Lösung. Das Aufpfropfen des polymeren Materials wird im Zuge einer üblichen Redoxpolymerisation unter Sauerstoffausschluss bewirkt. Als Polymerisations-Katalysator werden Cer(IV)-Ionen eingesetzt, da dieser Katalysator an der Oberfläche des Basismaterials Radikalstellen bildet, von welchen die Pfropfpolymerisation der Monomere gestartet wird.

Die Polymerisation wird durch Abbruchsreaktionen unter Beteilung der Cer-Salze beendet. Deswegen ist die (mittlere) Kettenlänge durch die Konzentrationsverhältnisse des Basismaterials, des Initiators und der Monomeren beeinflussbar. Weiterhin können einheitliche Monomere oder auch Gemische verschiedener Monomere eingesetzt werden; im letzteren Fall entstehen gepfropfte Copolymerisate.

Geeignete Monomere zur Herstellung der Pfropfpolymerisate sind Monomere entsprechend Formel V oder VI.

CR*R**=CR¹¹-Y (Formel V)

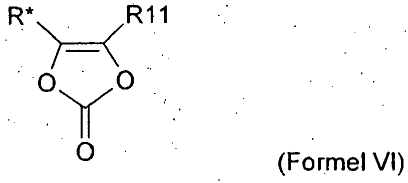

Diese Monomeren stellen (Meth) Acrylsäure (Y = -COOH), (Meth)Acrylsäurederivate mit
Y = 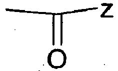 Allylamine (Y = -CH₂ NH₂, -CH₂NR¹²R¹³), (Meth)Acrylnitrile (Y = -CN), Acroleine (Y = - CHO), Vinylcarboxylate (Y = -OCOCHR¹⁵R¹⁶) oder Vinylencarbonate der Formel VI dar.

Alle diese Monomere stellen in wässriger Lösung radikalisch polymerisierbare Substanzen mit reversibel bindenden Gruppen dar, die neutral, sauer oder basisch sein können.

Werden als Monomere Vinylencarbonate der Formel VI oder Vinylcarboxylate CR*R** = CR¹¹-OCOCHR¹⁵R¹⁶ der Formel V eingesetzt, so wird vorzugsweise das erhaltene Produkt anschließend in ein Trennmaterial mit Hydroxylgruppen überführt. Diese Überführung in eine Hydroxyl-Phase wird durch eine an sich bekannte milde alkalische oder saure Verseifung erreicht. Beispielsweise kann die Reaktion mit methanolischer K₂CO₃-Lösung bei Raumtemperatur, beschrieben z.B. von Y. Tezuka et al., in Macromol. Chem. 186, 685-694 (1985), durchgeführt werden.

In den Formeln V und VI bedeutet R¹¹ vorzugsweise H, d.h. die Acrylsäurederivate sind bevorzugt.

Y in Formel V bedeutet vorzugsweise 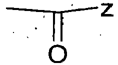 ,-COCHR¹⁵R¹⁶ oder-CH₂NH₂, in zweiter Linie bevorzugt -CN oder -CHO.

R¹⁵ und R¹⁶ bedeuten unabhängig voneinander H oder eine Alkylgruppe mit bis zu 5 C-Atomen. Vorzugsweise ist mindestens einer der Reste R¹⁵ und R¹⁶ H. Folgende Reste sind besonders bevorzugt: Acetyloxy-, Propionyloxy-, Butyryloxy-, Valeryloxy- und Hexanoyloxy-Rest.

Z bedeutet in Formel V -OR¹⁴, -OH oder -NR¹²R¹³, vorzugsweise -NR¹²R¹³.

Bevorzugt sind dabei Verbindungen, in denen Z - NR¹²R¹³ bedeutet und einer der Reste R¹² und R¹³ H ist.

Die Reste R¹² und/oder R¹³ bedeuten bevorzugt eine Alkyl-, Phenyl-, Phenylalkyl- oder Alkylphenylgruppe, wobei die Alkyl- und/oder die Phenylgruppe ein- oder mehrfach, vorzugsweise ein- oder zweifach, insbesondere bevorzugt einfach, substituiert sein kann durch einen Alkoxy-, Cyano-, Amino-, Mono- oder Dialkylamino-, Trialkylammohium-, Carboxyl-, Sulfonsäure-, Acetoxy- oder Acetamino-Rest.

Die Reste R¹² und/oder R¹³ bedeuten bevorzugt Alkyl, Alkoxyalkyl, Cyanoalkyl, Aminoalkyl, Mono- oder Dialkylaminoalkyl, Trialkylammoniumalkyl, Carboxyalkyl oder Sulfonsäurealkyl mit bis zu 10 C-Atomen, bevorzugt bis zu 6 C-Atomen, insbesondere bevorzugt bis zu 4 C-Atomen in der Alkylgruppe, die linear oder verzweigt sein kann. R¹² und/oder R¹³ bedeuten demnach bevorzugt Methyl, Ethyl, Propyl, Butyl, Pentyl, Hexyl, Methoxymethyl, Ethoxymethyl, 2-Methoxyethyl, 2-, 3- oder 4-Oxapentyl, 2-, 3-, 4- oder 5-Oxahexyl, 2-, 3-, 4-, 5- oder 6-Oxaheptyl, Isopropyl, 2- Butyl, Isobutyl, 2-Methylbutyl, Isopentyl, 2-Methylpentyl, 3-Methylpentyl, 2-Oxa-3-methylbutyl, 3-Oxa-4-methylbutyl, 2-Methyl-3-oxapentyl, 2-Methyl- 3-oxahexyl, ferner auch Heptyl, Octyl, Nonyl oder Decyl.

Ferner bevorzugt sind auch Alkylgruppen, die durch eine Cyano, Carboxy- oder Sulfonsäuregruppe substituiert vorliegen. Demnach bedeuten R¹² und/oder R¹³ bevorzugt Cyanomethyl, Cyanoethyl, Cyanopropyl, Cyanobutyl, Cyanopentyl, Cyanohexyl, 2-Cyanopropyl, 2- Cyanobutyl, Carboxylmethyl, Carboxylethyl, Carboxylpropyl, Carboxylisopropyl, Carboxylbutyl, Carboxylpentyl, Carboxylhexyl, Carboxyl- 2-methylpropyl, Carboxyl-2-methylbutyl, Sulfonsäuremethyl, Sulfonsäureethyl, Sulfonsäurepropyl, Sulfonsäurebutyl, Sulfonsäurepentyl, Sulfonsäurehexyl, Sulfonsäure-2-methylpropyl, Sulfonsäure-2-methylbutyl, Sulfonsäure-3-methylbutyl, Sulfonsäure-2-methylpentyl, Sulfonsäure-3- methylhexyl oder Sulfonsäure-2-ethylpentyl.

Ferner sind die Alkylgruppen bevorzugt einfach substituiert durch eine Amino-, Mono- oder Dialkylamino- oder Trialkylammoniumgruppe. Die Alkylgruppen können dabei gleich oder verschieden sein und bis zu 10, vorzugsweise bis zu 6 C- Atomen, insbesondere bevorzugt bis zu 4 C-Atomen, besitzen und bedeuten demnach vorzugsweise Dimethylaminoethyl, Diethylaminoethyl, Methylaminoethyl, Methylaminopropyl, Dimethylaminopropyl, Ethylaminoethyl, Propylaminoethyl, Propylaminopropyl, Dipropylaminoethyl, Dipropylaminobutyl, Diethylaminoethyl, Trimethylammoniumethyl, Trimethylammoniumpropyl, Trimethylammoniumbutyl,Triethylammoniumethyl, Triethylammoniumpropyl, Triethylammoniumethyl, Aminoethyl, Aminopropyl, Aminobutyl oder Aminopentyl. Alle diese Alkyl- und substituierte Alkylgruppen sind ebenfalls bevorzugt als Substituenten an der Phenylgruppe.

Bevorzugt für R¹² und/oder R¹³ ist auch ein Sulfonsulfid der Struktur - (CH₂)ₙ- SO₂-(CH₂)-S- (CH₂)ₙOH mit n = 2, 3, 4, 5 oder 6, vorzugsweise 2, 3 oder 4.

Vorzugsweise hat R¹² und/oder R¹³ auch die Bedeutung einer Phenylgruppe, die vorzugsweise einfach substituiert ist durch Cyano, Cyanoalkyl, Amino, Aminoalkyl, Mono- oder Dialkylamino, Alkyl, Alkoxy, Alkoxyalkyl, Mono- oder Dialkylaminoalkyl, Trialkylammonium- oder Trialkylammoniumalkyl, Carboxy, Carboxyalkyl, Sulfonsäure oder Sulfonsäurealkyl. Die bevorzugten Bedeutungen dieser Substituenten entsprechen den vorstehend angegebenen bevorzugten Alkylgruppen und substituierten Alkylgruppen. Der Substituent an der Phenylgruppe sitzt vorzugsweise in p-Stellung.

p-Acetoxyphenyl, p-Aminophenyl oder p- Acetaminophenyl sind ebenfalls bevorzugte Bedeutungen für R¹² und/oder R¹³.

Bevorzugt für R¹² und/oder R¹³ ist ferner eine Alkylphenyl- oder Phenylalkylgruppe, wobei ebenfalls die angegebenen bevorzugten Bedeutungen für die Alkyl-, substituierten Alkyl- oder substituierten Phenylgruppen gelten sollen.

Demnach gelten folgende substituierte Phenylgruppen beispielsweise als besonders bevorzugt: 4-Cyanophenyl, 4- Alkylphenyl, 4-'(N,N-Dimethylamino)-phenyl, 4-(N,N-Dialkylaminoethyl)- phenyl, 4-Ethoxyphenyl, 4-Ethoxyethylphenyl, 4- Trialkylammoniumphenyl, 4- Carboxylphenyl, 4-Sulfonsäurephenyl, Phenylethyl, 4-(N-Ethylamino) phenylpropyl oder 4-Cyanophenyl-ethyl.

Des weiteren sind Monomere der Formel V bevorzugt, in denen R¹² und/oder R¹³ einen cyclischen oder bicyclischen Rest, der aromatisch oder gesättigt sein kann, mit 5-10 C- Atomen, worin ein- oder mehrere CH- oder CH₂- Gruppen durch N oder NH, N oder NH und S, oder N oder NH und O ersetzt sind, bedeuten.

R¹² und/oder R¹³ bedeuten demnach bevorzugt auch einen Pyridinrest, Imidazolylrest, Indolylrest, ferner bevorzugt einen Pyrrol-, Pyrimidin-, Pyrazin-, Chinolin- oder Isochinolinrest.

R¹² und/oder R¹³ können beispielsweise auch einen Thiazol-, Thiadiazol-, Morpholin-, Triazin-, Piperazin-, Benzothiazol-, Purin-, Pyrazol-, Triazol-, Pyrrolidin- oder Isoxazol-Rest bedeuten.

Insbesondere bevorzugt sind dabei die aromatischen, heterocyclischen Reste.

Die Reste R¹² und R¹³ müssen, um zu geeigneten Austauschern zu gelangen, so aufeinander abgestimmt werden, dass entweder beide Reste eine saure oder basische Gruppe enthalten oder aber einer der Reste neutral ist. Dem Fachmann bereitet es keine Schwierigkeit, die Gruppen entsprechend zuzuordnen und somit geeignete Reste für R¹² und R¹³ zusammenzustellen, je nach Funktion und Aufgabe des gewünschten Ionenaustauschers.

Vorzugsweise ist einer der beiden Reste R¹² und R¹³ ein neutraler Rest.

R¹⁴ bedeutet bevorzugt Alkyl, Alkoxyalkyl, Cyanoalkyl, Carboxyalkyl oder Sulfonsäurealkyl mit bis zu 10 C-Atomen, vorzugsweise mit bis zu 6 C-Atomen, insbesondere bevorzugt mit bis zu 4 C- Atomen in der Alkylgruppe, die linear oder verzweigt sein kann. R¹⁴ bedeutet demnach bevorzugt Methyl, Ethyl, Propyl, Butyl, Pentyl, Hexyl, Methoxymethyl, Ethoxymethyl, 2-Methoxyethyl, 2-, 3- oder 4- Oxapentyl, Isopropyl, 2-Butyl, Isobutyl, 2-Methylbutyl, Isopentyl, 2- Methylpentyl, 3-Methylpentyl, 2-Oxa-3-methylbutyl, 3-Oxa-4-methylbutyl, 2- Methyl-3- oxapentyl oder 2-Methyl-3-oxahexyl.

Ferner bevorzugt sind auch Alkylgruppen, die durch eine Cyano, Carboxy- oder Sulfonsäuregruppe substituiert vorliegen. Demnach bedeutet R¹⁴ bevorzugt Cyanomethyl, Cyanoethyl, Cyanopropyl, Cyanobutyl, Cyanopentyl, Cyanohexyl, 2-Cyanopropyl, 2-Cyanobutyl, Carboxylmethyl, Carboxyethyl, Carboxylpropyl, Carboxylisopropyl, Carboxylbutyl, Carboxylpentyl, Carboxylhexyl, Carboxyl-2-methylpropyl, Carboxyl-2-methylbutyl, Sulfonsäuremethyl, Sulfonsäureethyl, Sulfonsäurepropyl, Sulfonsäurebutyl, Sulfonsäurepentyl, Sulfonsäurehexyl, Sulfonsäure-2-methylpropyl, Sulfonsäure-2-methylbutyl, Sulfonsäure-3- methylbutyl, Sulfonsäure-2- methylpentyl, Sulfonsäure-3-methylhexyl oder Sulfonsäure-2-methylpentyl.

Alle diese Alkyl- und substituierten Alkylgruppen, sind ebenfalls bevorzugt als Substituenten an der Phenylgruppe.

Vorzugsweise hat R¹⁴ auch die Bedeutung einer Phenylgruppe, die vorzugsweise einfach substituiert ist durch Cyano, Cyanoalkyl, Alkyl, Alkoxy, Alkoxyalkyl, Carboxy, Carboxyalkyl, Sulfonsäure oder Sulfonsäurealkyl. Die bevorzugten Bedeutungen dieser Substituenten entsprechen den vorstehend angegebenen bevorzugten Alkylgruppen und substituierten Alkylgruppen. Der Substituent an der Phenylgruppe sitzt vorzugsweise in p-Stellung.

R* und R** in den Monomeren der Formel V bedeuten vorzugsweise H.

R* und R¹¹ in Formel VI bedeuten vorzugsweise H.

Typischerweise werden Ketten auf das Basismaterial aufgepfropft, die zwischen 2 und 100, vorzugsweise 5 und 60, insbesondere zwischen 10 und 30 Monomereinheiten aufweisen.

Wie schon vorab erwähnt, gibt es Sorbenzien, bei denen ausschließlich ein Typ von Separationseffektor in der Grundmatrix vorliegt ("single mode" Sorbentien), und Co-Polymerisate oder "mixed-mode" Sorbenzien, bei denen mindestens zwei verschiedene Typen von Separationseffektoren im Sorbens vorliegen. "single mode" Sorbentien trennen die gelösten Stoffe (Solute) auf Grundlage einer Art von Wechselwirkung zwischen Separationseffektor und Solute. Bei der Anwendung von mixed mode Sorbenzien beruht die Trennung der gelösten Stoffe (Solute) auf verschiedenen Arten von Wechselwirkungen zwischen Separationseffektor und Solute. Derartige chromatographische Verfahren sind als mixed mode Chromatographie bekannt.

Im einfachsten Fall nutzt man beispielsweise die Hydrophobe der Grundmatrix aus, um durch Einführung eines ionischen Separationseffektors ein für die mixed-mode Chromatographie geeignetes Sorbens bereitzustellen. Auch durch Umsetzung einer Grundmatrix mit zwei verschiedenen Reaktanden, von denen einer beispielsweise eine hydrophobe Gruppe, der andere eine ionische Gruppe in die Grundmatrix einführt, sind mixed-mode Sorbentien zugänglich. Der Nachteil beider Vorgehensweisen besteht darin, dass die sterische Beziehung zwischen den verschiedenen Typen von Separationseffektoren nicht definiert sind. Dieser Nachteil wird bei mixed-mode Sorbentien vermieden, bei denen die verschiedenen Separationseffektoren in einem Liganden kombiniert sind. Dieser Ligand ist an die Grundmatrix gebunden.

Beide vorgenannten Typen von mixed-mode Sorbentien sind von L.W. McLaughlin (1989) in Chem.Rev. 89, 309 - 319 in einem Übersichtsartikel beschrieben. Ein mixed-mode Sorbens, dessen verschiedene Separationseffektoren in einem einheitlichen Liganden gebunden vorliegen, kann z.B. aus einem mit Chlorpropylgruppen substituierten Trägermaterial durch Überführung der Chlorderivate in Bromderivate und anschließender Umsetzung mit Benzyldimethylamin bereitgestellt werden: Der Ligand ist über eine C3-Kette an die Grundmatrix gebunden. Daran schließt sich eine dimethylsubstituierte Ammoniumgruppierung an, an die ein lipophiler Benzylrest gebunden ist. Eine umgekehrte Anordnung von hydrophoben und ionischen Separationseffektoren in einem Liganden ist durch Umsetzung von mit Aminopropylgruppen substituierten Trägermaterial mit p-Diethylaminobenzoesäure erhältlich: Bei diesem Liganden ist die tertiäre Aminogruppe distal von der Grundmatrix orientiert, während bei der erstgenannten Variante die hydrophobe Benzylgruppe distal angeordnet ist.

Weitere Ausführungsformen derartiger Liganden mit zwei Separationseffektoren sind in folgenden Druckschriften offenbart: WO 96/09116, WO 97/29825, WO 00/69872 und WO01/38228. In der Patentanmeldung EP 04028798.9 werden komplexere Liganden mit mehr als je einem Separationseffektor, sowie Anionenaustauschgruppen, deren Stickstoff als Azaderivat von Mehrringstrukturen, beispielsweise dem Chininuklidinsystem, vorliegt, offenbart. Beispiele hierfür sind:

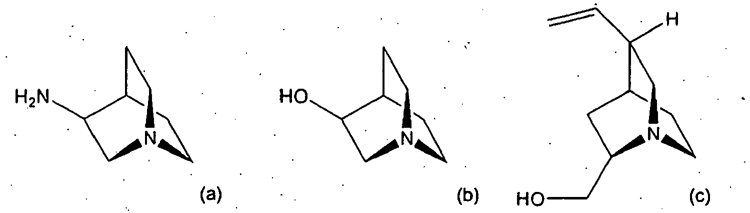

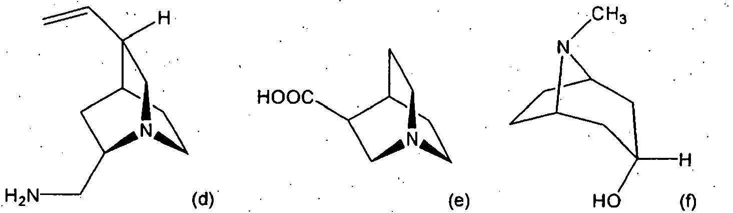

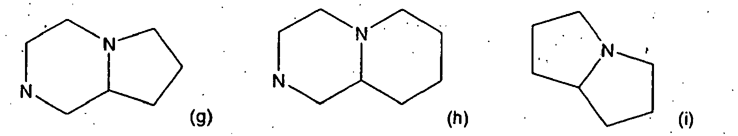

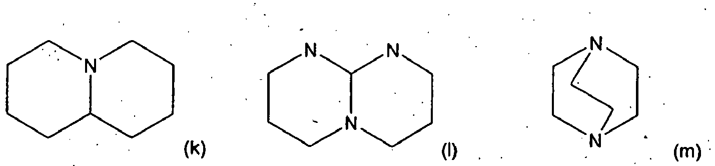

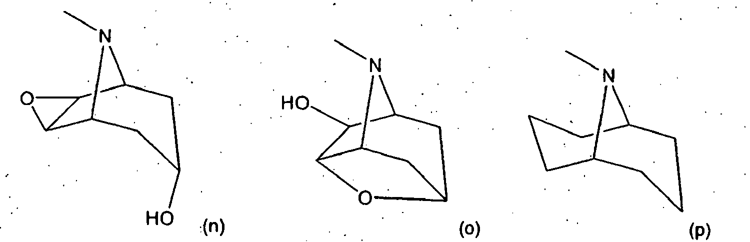

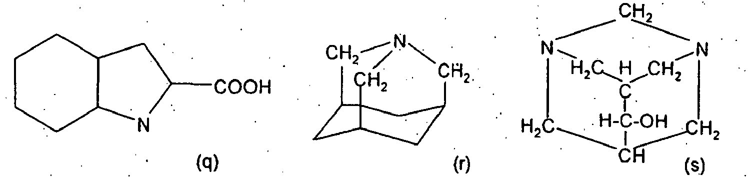

Die möglichen Anwendungen von nativen oder mit Separationseffektoren versehenen erfindungsgemäßen Polymeren können beispielsweise umfassen
- die selektive, bedingt selektive oder unselektive Bindung oder Adsorption einer oder mehrerer Zielkomponenten mit dem Ziel der Abtrennung aus einer Matrix heraus
- die selektive, bedingt selektive oder unselektive Bindung oder Adsorption einer oder mehrerer Nebenkomponenten mit dem Ziel der Abtrennung der Nebenkomponente aus einer Matrix heraus
- die Auftrennung eines Stoffgemisches ohne Bindung oder Adsorption einer oder mehrerer Komponenten nur aufgrund der Molekulargröße gemäß Größenausschlusschromatographie
- die Isolierung, Anreicherung und/oder Abreicherung von Biopolymeren aus natürlichen Quellen
- die Isolierung, Anreicherung und/oder Abreicherung von Biopolymeren aus rekombinanten Quellen
- die Isolierung, Anreicherung und/oder Abreicherung von Bioploymeren aus immortalisierten Zellinien sowie deren Kulturüberständen oder aus Pflanzen, insbesondere transgenen Pflanzen
- die Isolierung, Anreicherung und/oder Abreicherung von Bioploymeren aus B-Zellinien und deren Derivaten, Lymphzellen und Hybridomazellinien und deren Kulturüberständen
- die Isolierung, Anreicherung und/oder Abreicherung von Proteinen und Peptiden
- die Isolierung, Anreicherung und/oder Abreicherung von Enzymen
- die Isolierung, Anreicherung und/oder Abreicherung von monoklonalen und polyklonalen Antikörpern und natürlich vorkommenden oder rekombinanten Antikörperfragmenten
- die Isolierung, Anreicherung und/oder Abreicherung phosphorylierter . Peptide/proteine und Nukleinsäuren
- die Isolierung, Anreicherung und/oder Abreicherung von Lebensmittelzusatzstoffen
- die Isolierung, Anreicherung und/oder Abreicherung von Mono- und Polysacchariden
- die Isolierung, Anreicherung und/oder Abreicherung von glykosylierten Proteinen
- die Isolierung, Anreicherung und/oder Abreicherung von einsträngiger oder doppelsträngiger DNS
- die Isolierung, Anreicherung und/oder Abreicherung von Plasmid DNA
- die Isolierung, Anreicherung und/oder Abreicherung von RNA
- die Isolierung, Anreicherung und/oder Abreicherung von Viren
- die Isolierung, Anreicherung und/oder Abreicherung von Host Cell Proteinen
- die Isolierung, Anreicherung und/oder Abreicherung von Oligo- und Polynukleotiden
- die Isolierung, Anreicherung und/oder Abreicherung von Liposomen
- die Isolierung, Anreicherung und/oder Abreicherung von Produkten aus Blut und Milch
- die Isolierung, Anreicherung und/oder Abreicherung von niedermolekularen Arzneimittelwirkstoffen (APIs: active pharmaceutical ingredient)
- der Abtrennung eines APIs von einem API-Arzneistoffträger (z.B. ein API-Liposom Addukt oder ein API-Nanopartikel Addukt)
- die Isolierung, Anreicherung und/oder Abreicherung von Enantiomeren

Je nach Art der Separationseffektoren entspricht die Verwendung der erfindungsgemäßen Polymere beispielhaft der Affinitätschromatographie, der Ionenaustauschchromatographie, der hydrophoben Interaktionschromatographie, der Größenausschlußchromatographie, der chiralen Chromatographie oder der mixed-mode Chromatographie oder der flüssigflüssig Verteilungschromatographie

Die erfindungsgemäßen Polymere, in ihrer nativen Form oder entsprechend der Anwendung mit Separationseffektoren versehen, können in bekannten chromatographischen konzeptionellen Verfahren, in denen ein Sorbens verwendet wird, Verwendung finden. Grundsätzlich sind diese Verfahren in diskontinuierliche und kontinuierliche Verfahren zu unterteilen. Beispiele für diskontinuierliche Verfahren sind in "Preparative Chromatography" (Ed. H. Schmidt-Traub, Wiley-VCH Verlag Weinheim, 2005, ISBN 3-527-30643-9, Seite 183-189) genannt. Weitere Beispiele sind die FlashChromatographie, die Expanded Bed Chromatographie u.a. Des weiteren können die erfindungsgemäßen Polymere, in ihrer nativen Form oder entsprechend der Anwendung mit Separationseffektoren versehen, in kontinuierlichen Verfahren wie z.B. der Simulated Moving Bed Chromatography Verwendung finden. Weitere Beispiele für kontinuierliche Verfahren sind in "Preparative Chromatography" (Ed. H. Schmidt-Traub, Wiley-VCH Verlag Weinheim, 2005, ISBN 3-527-30643-9, Seite 190-204) beschrieben.

Sowohl die kontinuierlichen Verfahren als auch die diskontinuierlichen Verfahren können je nach Zielstellung sowohl isokratisch als auch unter Verwendung der Gradienten-Technik durchgeführt werden. Dem Fachmann ist bekannt, wie das erfindungsgemäße Sorbens, nativ oder mit Separationseffektoren versehen, für die gewünschte Zielstellung in einem der genannten Verfahren einzusetzen ist.

Auch können die erfindungsgemäßen Polymere in der Dünnschichtchromatographie Verwendung finden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung EP 05 016 846.7, eingereicht am 03.08.2005, ist durch Bezugnahme in diese Anmeldung eingeführt.

### Beispiele

### 1. Herstellung eines Copolymerisats aus Butandioimonovinylether und Divinylethylenharnstoff

In einem Doppelmantelreaktor werden 1050 ml entionisiertes Wasser (VE Wasser) vorgelegt und darin 0,32 g Tributylphosphat, 4,2 g Natriumsulfat, 0,01 g Natriumlaurylsulfonat und 2,1 g Polyvinylalkohol als Stabilisator gelöst. Die organische Phase, bestehend aus 96,25 g Butandiolmonovinylether, 78,45 g Divinylethylenharnstoff, 175 g Dodecanol und 4,2 g α,α'-Azo-diisobuttersäurenitril wird nach Mischung und Lösung der Bestandteile bei Raumtemperatur zur wässerigen Phase unter Rühren hinzugefügt. Die Suspension wird kräftig gerührt und anschließend unter Stcikstoffspülung auf 70°C erwärmt. Nach ca. 2 Stunden wird für 4 Stunden bei 80°C nachpolymerisiert. Nach Abkühlen auf Raumtemperatur wird das Polymer abgenutscht, das Porogen mit Wasserdampfdestillation entfernt und das Produkt in 20% ethanolischer Lösung gelagert.

Es werden 130 g Polymer, bezogen auf Trockenmasse erhalten. Die durchschnittliche Korngröße beträgt 80 µm.

Charakterisierung der porösen Struktur:
Spezifische Oberfläche (BET): 322 m²/g

Das Quellvolumen des Reaktionsproduktes beträgt 4,3 ml/g.

### 2. Bestimmung des Retentionsverhaltens von Proteinen (Unspezifische Bindung)

Die Bestimmung des Retentionsverhalten von Proteinen als Funktion der Salzkonzentration wird eingesetzt, um das Proteinbindungsverhaften des unmodifizierten Trägermaterials zu untersuchen. Da Proteine auf dem unmodifizierten Trägermaterial nur unspezifisch binden, ist es vorteilhaft, wenn möglichst wenig Hintergrundbindung auftritt.

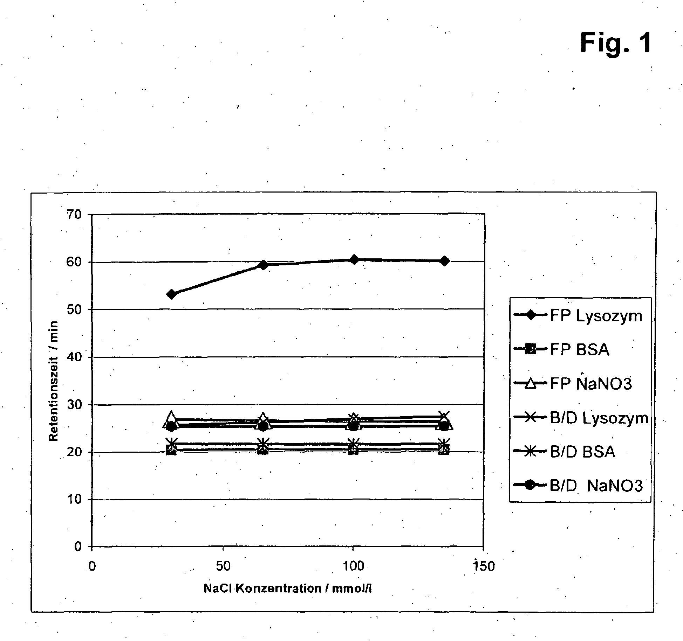

Das Bindungsverhalten des erfindungsgemäßen Materials (hergestellt entsprechend Beispiel 1) wird im Vergleich zu dem unmodifizierten Copolymer aus 1,2,-Dihydroxy-3-allylaxy-propan und Methylenbisacrylamid, kommerziell erhältlich unter dem Namen FractoPrep^{®} (Merck KGaA, Deutschland), dargestellt. Abbildung 1 zeigt das Bindungsverhalten der Proteine Lysozym und Rinderserumalbumin sowie von NaNO₃. Die Abkürzung FP steht für FractoPrep^{®}, B/D steht für das erfindungsgemäße Copolymer aus Butandiolmonovinylether und Divinylethylenharnstoff.

Die Wiederfindung der gemessenen Proteine, angegeben als Quotient aus der photometrisch bestimmten Menge an von der Säule unter den Laufbedingungen eluierten Protein zu dem auf die Säule aufgegebenen Protein, ist unter allen Versuchsbedingungen größer 90%.

### 3. Größenausschlußchromatographie auf dem erfindungsgemäßen Polymer

Eine beispielhafte Porenstruktur des erfindungsgemäßen Polymers ist durch die experimentell bestimmten Verteilungskoeffizienten Kd von Dextranen mit unterschiedlichen Molekulargewichten, ausgedrückt durch den Viskositätsradius der Dextrane, beispielhaft in Abbildung 2 gezeigt.

### 4. Basenstabilitätsuntersuchungen

Das entsprechend Beispiel 1 hergestellte erfindungsgemäße Material wird bei Raumtemperatur in 0,5 M NaOH gelagert (Volumenverhältnis NaOH: Polymergel = 4:1).

Nach bestimmten Zeiten wird das Trennverhalten des Polymers anhand des Retentionsverhaltens bei der Trennung verschiedener Pullulane (Firma PSS, Mainz, Deutschland) als Markerverbindungen getestet.
Eluent: 100 mM NaCl, 20 mM NaH₂PO₄, pH 7,2
Säule: 300x10 mm, Fluß: 0,8 ml/min, Brechungsindexdetektor.

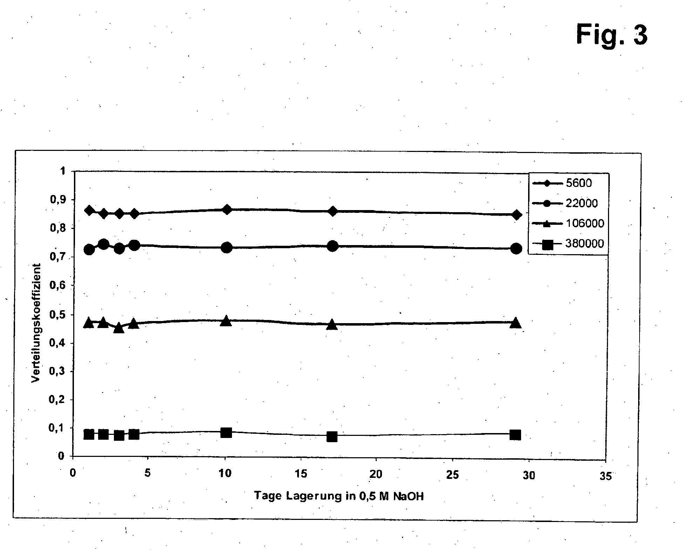

Abbildung 3 zeigt die Ergebnisse. Es ist klar zu erkennen, dass die Lagerung in verdünnter Natronlauge keinerlei Auswirkung auf den Verteilungskoeffizienten hat.

### 5.) Trennungeines Proteingemisches

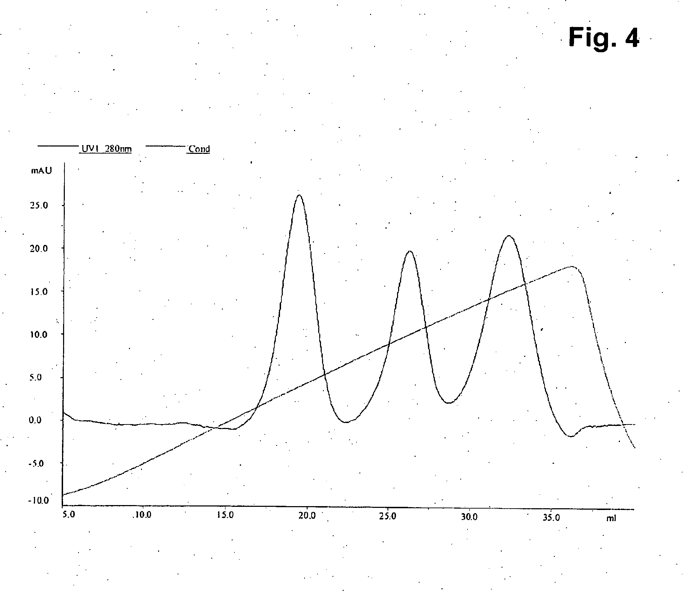

Das erfindungsgemäße Polymer, bestehend in diesem Beispiel aus einem Copolymer von 65 Gew% Butandiolmonovinylether und 35 Gew% Divinylethylenharnstoff in Form sphärischer poröser Partikel mit einem mittleren Partikeldurchmesser von 107 µm, wird mittels Ce(IV) initiierter Pfropfpolymerisation von 2-Acrylamido-2-methyl-1-propansulfonsäure mit kationischen Separationseffektoren entsprechend der auf Seite 10 unter Herstellbeispiel A2 in WO 03/031062 beschriebenen Vorgehensweise versehen. Die Dichte an funktionellen SO₃ Gruppen in diesem Polymer wird zu 1195 µmol bezogen auf 1 g Trockenmasse bestimmt. Das hergestellte Ionenaustauschermaterial (LOT: BDM SO3 DZ38) wird in eine Superformance™ Glassäule, Fa. Goetec Labortechnik, (40 mm Höhe des Sorbensbettes, 10 mm Durchmesser) gefüllt und mit einem Puffer bestehend aus 20 mM NaH₂PO₄, pH 6.0 äquilibriert. Es werden 500 µl einer Lösung von 5 mg/ml Chymotrypsinogen A, 5 mg/ml Lysozym und 5 mg/ml Cytochrom C in 20 mM NaH₂PO₄ auf die Säule gegeben. Nach der Aufgabe wird über einen linearen Gradienten innerhalb von 12 Säulenvolumina auf 100 % einer Lösung von 20 mM NaH₂PO₄, 1 M NaCl, pH 6.0 eluiert. Das Elutionsverhalten des erfindungsgemäßen Polymers führt zu einer Trennung der einzelnen Proteine des Gemisches. Abbildung 4 zeigt das zugehörige Chromatogramm.

### 6.) Druck-Fluß Verhalten

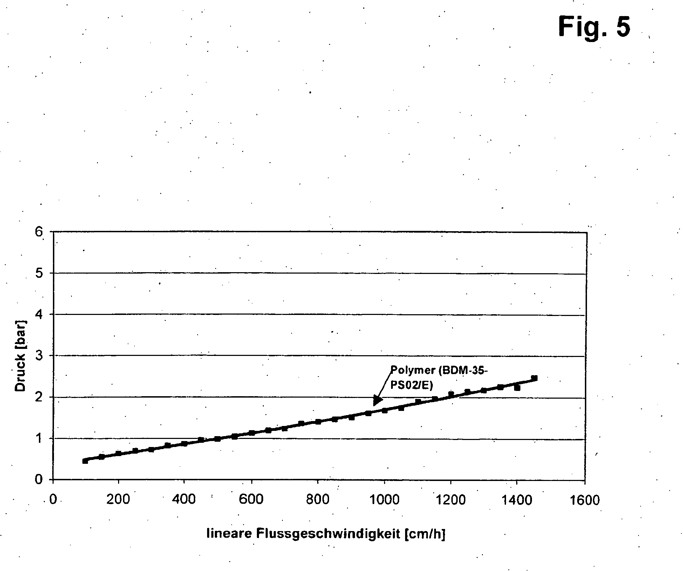

Das erfindungsgemäße Polymer in seiner nativen Form, bestehend aus 65 Gew%. Butandiolmonovinylether und 35 Gew% Divinylethylenharnstoff (LOT: BDM PS02/E) wird in eine Superformance™ Glassäule, Fa. Goetec Labortechnik, mit einem Durchmesser von 50 mm gefüllt. Die Höhe des Sorbensbettes beträgt 20 cm. Der mittlere Partikeldurchmesser des sphärischen porösen Polymers beträgt 107 µm. Der Druckabfall über diese Säule wird als Funktion der Flußrate einer Lösung von 100 mM NaCl, 20 mM NaH₂PO₄, pH 6.0, gemessen. Auch bei einer sehr hohen Flußrate von 1400 cm/h ist der Druckabfall kleiner 3 bar. Abbildung 5 zeigt die zugehörige graphische Darstellung der Druck-Fluß Messung.

## Patentansprüche

1. Polymer auf Basis eines Copolymers zumindest aus
b) mindestens einem hydrophil substituierten Alkylvinylether der Formel I 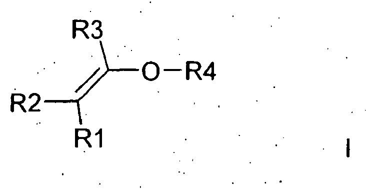 wobei R1, R2, R3 unabhängig voneinander H oder C1 bis C6 Alkyl sein können
und R4 ein Rest ist, der zumindest eine Hydroxylgruppe trägt
und
b)
mindestens einem Vernetzer entsprechend Formel II und/oder III und/oder IV, mit 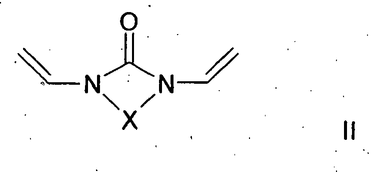 wobei X ein zweiwertiger Alkylrest mit 2 bis 5 C-Atomen ist, bei dem ein oder mehrere nicht benachbarte und nicht in direkter Nachbarschaft von N befindliche Methylengruppen durch O, C=O, S, S=O, SO₂, NH, NOH oder N ersetzt sein können und ein oder mehrere H-Atome der Methylengruppen unabhängig voneinander durch Hydroxylgruppen, C1-C6-Alkyl, Halogen, NH₂, C5-C10-Aryl, NH-(C1-C8)-Alkyl, N-(C1-C8)-Alkyl₂, C1-C6-Alkoxy oder C1-C6-Alkyl-OH substituiert sein können, und 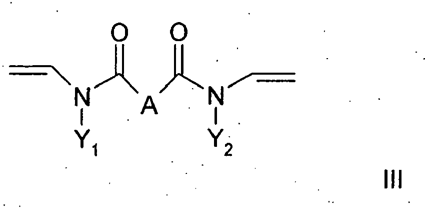 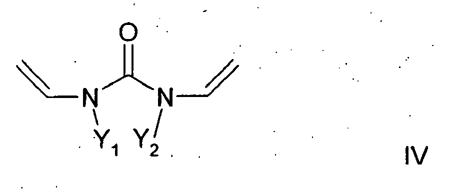 wobei Y1 und Y2 in Formel III und IV unabhängig voneinander
C1 bis C10 Alkyl oder Cycloalkyl sind, wobei ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H-Atome der Methylengruppen. unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können,
oder C6 bis C18 Aryl sind, wobei ein oder mehrere H-Atome in dem Arylsystem unabhängig voneinander durch Hydroxygruppen, C1-C6-Alkyl, Halogen, NH₂, NH(C1-C8)Alkyl, N(C1-C8)Alkyl₂, C1-C6-Alkoxy oder C1-C6-Alkyl-OH substituiert sein können und
A ein zweiwertiger Alkylrest mit 2 bis 5 C-Atomen ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

2. Polymer entsprechend Anspruch 1, **dadurch gekennzeichnet, dass** R4 in Formel I
ein geradkettiger oder verzweigter C1 bis C10 Alkylrest ist, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH2, NH(C1-C8)Alkyl, N(C1-C8)Alkyl₂, C1-C6-Alkoxy oder C1-C6-Alkyl-OH substituiert sein können und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest , wobei ein oder mehrere H-Atome in dem Aryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

3. Polymer entsprechend Anspruch 1 oder 2, **dadurch gekennzeichnet, dass** als hydrophil substituierter Alkylvinylether eine Verbindung der Formel I eingesetzt wird, in der R4 ein Rest ist, der eine Hydroxylgruppe trägt.

4. Polymer entsprechend einem oder mehreren der Ansprüche 1 bis 3, **dadurch gekennzeichnet, dass** als hydrophil substituierter Alkylvinylether 1,2-Ethandiolmonovinylether, 1,3-Propandiolmonovinylether, 1,4-Butandiolmonovinylether, 1,5-Pentandiolmonovinylether, 1,6-Hexandiolmonovinylether, Diethylenglykolmonovinylether oder Cyclohexandimethanolmonovinylether eingesetzt wird.

5. Polymer nach einem oder mehreren der Ansprüche 1 bis 4, **dadurch gekennzeichnet, dass** als Vernetzer Divinylethylenharnstoff (1,3-Divinylimidazolin-2-on) oder Divinylpropylenharnstoff (1,3-Divinyl-tetrahydropyrimidin-2-on) eingesetzt wird.

6. Polymer nach einem oder mehreren der Ansprüche 1 bis 5, **dadurch gekennzeichnet, dass** das Polymer porös mit Porengrößen zwischen 2 und 200 nm ist.

7. Polymer nach einem oder mehreren der Ansprüche 1 bis 6, **dadurch gekennzeichnet, dass** das Polymer in Form von Partikeln mit einem Durchmesser zwischen 3 und 300 µm vorliegt.

8. Polymer nach einem oder mehreren der Ansprüche 1 bis 7, **dadurch gekennzeichnet, dass** das Polymer mit Separationseffektoren derivatisiert ist.

9. Polymer nach einem oder mehreren der Ansprüche 1 bis 8, **dadurch gekennzeichnet, dass** das Polymer mit Strukturen derivatisiert ist, die durch Pfropfpolymerisation auf das Polymer aufgebracht wurden.

10. Polymer nach einem oder mehreren der Ansprüche 1 bis 9, **dadurch gekennzeichnet, dass** das Polymer mit Strukturen derivatisiert ist, die durch Pfropfpolymerisation unter Cer(IV)-Katalyse auf das Polymer aufgebracht wurden.

11. Polymer nach Anspruch 9 oder 10, **dadurch gekennzeichnet, dass** die Strukturen Copolymeriate sind, die aus zwei oder mehreren unterschiedlichen Monomeren erzeugt wurden.

12. Verfahren zur Herstellung von Polymeren, **dadurch gekennzeichnet, dass** zumindest ein hydrophil substituierter Alkylvinylether der Formel I und zumindest ein Vernetzer entsprechend Formel II und/oder III und/oder IV copolymerisiert werden, mit 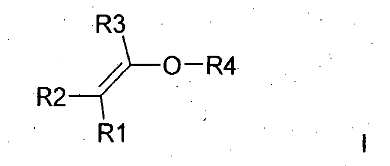 wobei R1, R2, R3 unabhängig voneinander H oder C1 bis C6 Alkyl, bevorzugt H oder -CH₃ sein können
und R4 ein Rest ist, der zumindest eine Hydroxylgruppe trägt
und 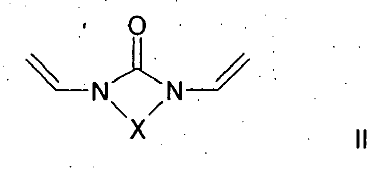 wobei X ein zweiwertiger Alkylrest mit 2 bis 5 C-Atomen ist, bei dem ein oder mehrere nicht benachbarte und nicht in direkter Nachbarschaft von N befindliche Methylengruppen durch O, C=O, S, S=O, SO₂, NH, NOH oder N ersetzt sein können und ein oder mehrere H-Atome der Methylengruppen 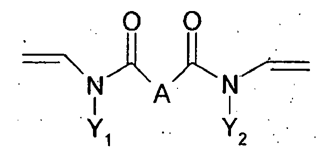 unabhängig voneinander durch Hydroxylgruppen, C1-C6-Alkyl, Halogen, NH₂, C5-C10-Aryl, NH-(C1-C8)-Alkyl, N-(C1-C8)-Alkyl₂, C1-C6-Alkoxy oder C1-C6-Alkyl-OH substituiert sein können, und 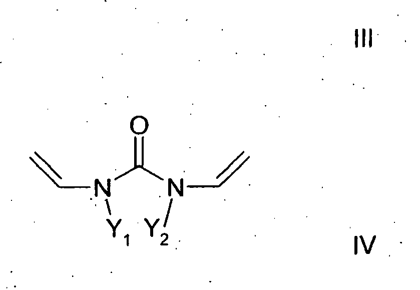 wobei Y1 und Y2 in Formel III und IV unabhängig voneinander
C1 bis C10 Alkyl oder Cycloalkyl sind, wobei ein öder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Ary), NH(C1-C8)Alkyl, N(C1-C8)Alkyl₂, C1-C6-Alkoxy oder C1-C6-Alkyl-OH substituiert sein können,
oder C6 bis C18 Aryl sind, wobei ein oder mehrere H in dem Arylsystem unabhängig voneinander durch Hydroxygruppen, C1-C6-Alkyl, Halogen, NH₂, NH(C1-C8)Alkyl, N(C1-C8)Alkyl₂, C1-C6-Alkoxy oder C1-C6-Alkyl-OH substituiert seinkönnen und
A ein zweiwertiger Alkylrest mit 2 bis 5 C-Atomen ist, bei dem ein oder mehrere nicht benachbarte Methylengruppen oder nicht in direkter Nachbarschaft von N befindliche Methylengruppen durch O, C=O, S, S=O, SO₂, NH, NOH oder N ersetzt sein können und ein oder mehrere H der Methylengruppen unabhängig voneinander durch Hydroxygruppen, C1-C6-Alkyl, Halogen, NH₂, C5-C10-Aryl, NH(C1-C8)Alkyl, N(C1-C8)Alkyl₂, C1-C6-Alkoxy oder C1-C6-Alkyl-OH substituiert sein können.

13. Verfahren nach Anspruch 12, **dadurch gekennzeichnet, dass** ein hydrophil substituierter Alkylvinylether der Formel I eingesetzt wird, in dem R4
ein geradkettiger oder verzweigter C1 bis C10 Alkylrest ist, bei dem ein oder mehrere nicht benachbarte Methylengruppen durch O, C=O, S, S=O, SO₂, NH, NOH, N ersetzt sein können und/oder bei dem ein oder mehrere H-Atome unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein kann und bei dem mindestens eine OH-Gruppe entweder an dem C1 bis C10 Alkylrest oder an einem Substituenten vorhanden ist,
oder ein cycloaliphatischer Rest mit typischerweise 5 bis 10 C-Atomen, bei dem ein oder mehrere nicht benachbarte Methylengruppen durch O, C=O, S, S=O, SO₂, NH, NOH, N ersetzt sein können und/oder bei dem ein oder mehrere H-Atome des cycloaliphatischen Restes unabhängig voneinander durch C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am cycloaliphatischen Ring oder an einer Seitenkette bzw. einem Substituenten vorhanden ist, oder ein
C6 bis C18 Aryl-Rest, wobei ein oder mehrere H-Atome in dem Aryl-Rest unabhängig voneinander durch Hydröxygruppen, C1-C6-Alkyl, C5-C10-Aryl, Halogen, NH₂, NH(C1-C8)Alkyl, N(C1-C8)Alkyl₂, C1-C6-Alkoxy oder C1-C6-Alkyl-OH substituiert sein können, wobei mindestens eine OH-Gruppe entweder am Aryl-Rest oder an einer Seitenkette bzw. einem Substituenten vorhanden ist, oder ein
C5 bis C18 Heteroaryl-Rest, wobei ein oder mehrere H-Atome in dem Heteroaryl-Rest unabhängig voneinander durch Hydroxygruppen, C1-C6-Alkyl, C5-C10-Aryl, Halogen, NH₂, NH(C1-C8)Alkyl, N(C1-C8)Alkyl₂ C1-C6-Alkoxy oder C1-C6-Alkyl-OH substituiert sein können, wobei mindestens eine OH-Gruppe entweder am Heteroaryl-Rest oder an einer Seitenkette bzw. einem Substituenten vorhanden ist.

14. Verfahren nach Anspruch 12 oder 13, **dadurch gekennzeichnet, dass** eine radikalische Suspensionspolymerisation durchgeführt wird.

15. Verfahren nach einem oder mehreren der Ansprüche 12 bis 14, **dadurch gekennzeichnet, dass** eine radikalische Suspensionspolymerisation in Wasser als Suspensionsmittel in Gegenwart von mindestens einem Suspensionsstabilisator und optionalen weiteren Zusätzen, bevorzugt anorganischen Salzen und grenzflächenaktiven Verbindungen durchgeführt wird.

16. Verfahren nach einem oder mehreren der Ansprüche 12 bis 15, **dadurch gekennzeichnet, dass** die Temperatur während der Polymerisation zwischen 40 und 100°C liegt.

17. Verfahren nach einem oder mehreren der Ansprüche 12 bis 16, **dadurch gekennzeichnet, dass** hydrophil substituierte Alkylvinylether und Vernetzer in einem Massenverhältnis zwischen 10:90 und 80:20 eingesetzt werden.

18. Verfahren nach einem oder mehreren der Ansprüche 12 bis 17, **dadurch gekennzeichnet, dass** die Polymerisation unter Zusatz eines oder mehrerer Porogene erfolgt.

19. Chromatographiesäule, Kappillare oder Kartusche enthaltend ein Polymer entsprechend einem oder mehreren der Ansprüche 1 bis 11 als Sorbens oder Trägermaterial.

20. Verwendung eines Polymers entsprechend einem oder mehreren der Ansprüche 1 bis 11 als Sorbens in der Chromatographie, als Trägermaterial zur Immobilisierung biologisch oder katalytisch aktiver Substanzen oder als Trägermaterial für eine Festphasensynthese.

## Claims

1. Polymer based on a copolymer at least comprising
a) at least one hydrophilically substituted alkyl vinyl ether of the formula I 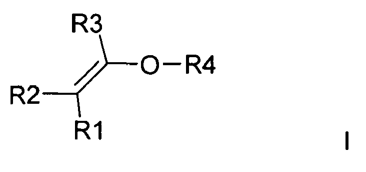 where R1, R2, R3 can be, independently of one another, H or C1 to C6 alkyl,
and R4 is a radical which carries at least one hydroxyl group
and
b)
at least one crosslinking agent conforming to formula II and/or III and/or IV, 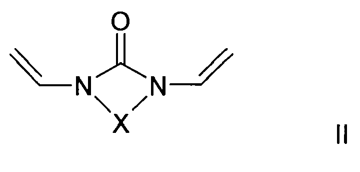 where X is a divalent alkyl radical having 2 to 5 C atoms, in which one or more methylene groups which are not adjacent and are not located in the direct vicinity of N may be replaced by O, C=O, S, S=O, SO₂, NH, NOH or N and one or more H atoms of the methylene groups may be substituted, independently of one another, by hydroxyl groups, C1-C6-alkyl, halogen, NH₂, C5-C10-aryl, NH-(C1-C8)-alkyl, N-(C1-C8)-alkyl₂, C1-C6-alkoxy or C1-C6-alkyl-OH, and 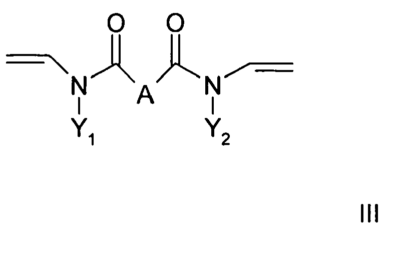 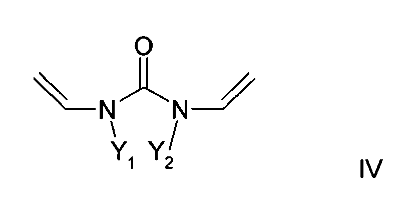 where Y1 and Y2 in formulae III and IV are, independently of one another,
C1 to C10 alkyl or cycloalkyl, where one or more non-adjacent methylene groups or methylene groups which are not located in the direct vicinity of N may be replaced by O, C=O, S, S=O, SO₂, NH, NOH or N and one or more H atoms of the methylene groups may be substituted, independently of one another, by hydroxyl groups, C1-C6-alkyl, halogen, NH₂, C5-C10-aryl, NH(C1-C8)alkyl, N(C1-C8)alkyl₂, C1-C6-alkoxy or C1-C6-alkyl-OH,
or C6 to C18 aryl, where one or more H atoms in the aryl system may be substituted, independently of one another, by hydroxyl groups, C1-C6-alkyl, halogen, NH₂, NH(C1-C8)alkyl, N(C1-C8)alkyl₂, C1-C6-alkoxy or C1-C6-alkyl-OH and
A is a divalent alkyl radical having 2 to 5 C atoms, in which one or more non-adjacent methylene groups or methylene groups which are not located in the direct vicinity of N may be replaced by O, C=O, S, S=O, SO₂, NH, NOH or N and one or more H of the methylene groups may be substituted, independently of one another, by hydroxyl groups, C1-C6-alkyl, halogen, NH₂, C5-C10-aryl, NH(C1-C8)alkyl, N(C1-C8)alkyl₂, C1-C6-alkoxy or C1-C6-alkyl-OH.

2. Polymer according to Claim 1, **characterised in that** R4 in formula I
is a straight-chain or branched C1 to C10 alkyl radical, in which one or more non-adjacent methylene groups may be replaced by O, C=O, S, S=O, SO₂, NH, NOH, N and/or in which one or more H atoms may be substituted, independently of one another, by C1-C6-alkyl, C5-C10-aryl, halogen, NH₂, NH(C1-C8)alkyl, N(C1-C8)alkyl₂, C1-C6-alkoxy or C1-C6-alkyl-OH and in which at least one OH group is present either on the C1 to C10 alkyl radical or on a substituent,
or a cycloaliphatic radical having typically 5 to 10 C atoms, in which one or more non-adjacent methylene groups may be replaced by O, C=O, S, S=O, SO₂, NH, NOH, N and/or in which one or more H atoms of the cycloaliphatic radical may be substituted, independently of one another, by C1-C6-alkyl, C5-C10-aryl, halogen, NH₂, NH(C1-C8)alkyl, N(C1-C8)alkyl₂, C1-C6-alkoxy or C1-C6-alkyl-OH, where at least one OH group is present either on the cycloaliphatic ring or on a side chain or substituent, or a
C6 to C18 aryl radical, where one or more H atoms in the aryl radical may be substituted, independently of one another, by hydroxyl groups, C1-C6-alkyl, C5-C10-aryl, halogen, NH₂, NH(C1-C8)alkyl, N(C1-C8)alkyl₂, C1-C6-alkoxy or C1-C6-alkyl-OH, where at least one OH group is present either on the aryl radical or on a side chain or substituent, or a
C5 to C18 heteroaryl radical, where one or more H atoms in the heteroaryl radical may be substituted, independently of one another, by hydroxyl groups, C1-C6-alkyl, C5-C10-aryl, halogen, NH₂, NH(C1-C8)alkyl, N-(C1-C8)alkyl₂, C1-C6-alkoxy or C1-C6-alkyl-OH, where at least one OH group is present either on the heteroaryl radical or on a side chain or substituent.

3. Polymer according to Claim 1 or 2, **characterised in that** the hydrophilically substituted alkyl vinyl ether employed is a compound of the formula I in which R4 is a radical which carries a hydroxyl group.

4. Polymer according to one or more of Claims 1 to 3, **characterised in that** the hydrophilically substituted alkyl vinyl ether employed is 1,2-ethanediol monovinyl ether, 1,3-propanediol monovinyl ether, 1,4-butanediol monovinyl ether, 1,5-pentanediol monovinyl ether, 1,6-hexanediol monovinyl ether, diethylene glycol monovinyl ether or cyclohexanedimethanol monovinyl ether.

5. Polymer according to one or more of Claims 1 to 4, **characterised in that** the crosslinking agent employed is divinylethyleneurea (1,3-divinylimidazolin-2-one) or divinylpropyleneurea (1,3-divinyltetrahydropyrimidin-2-one).

6. Polymer according to one or more of Claims 1 to 5, **characterised in that** the polymer is porous with pore sizes between 2 and 200 nm.

7. Polymer according to one or more of Claims 1 to 6, **characterised in that** the polymer is in the form of particles having a diameter between 3 and 300 µm.

8. Polymer according to one or more of Claims 1 to 7, **characterised in that** the polymer has been derivatised by means of separation effectors.

9. Polymer according to one or more of Claims 1 to 8, **characterised in that** the polymer has been derivatised by means of structures which were attached to the polymer by graft polymerisation.

10. Polymer according to one or more of Claims 1 to 9, **characterised in that** the polymer has been derivatised by means of structures which were attached to the polymer by graft polymerisation with cerium(IV) catalysis.

11. Polymer according to Claim 9 or 10, **characterised in that** the structures are copolymers which have been produced from two or more different monomers.

12. Process for the preparation of polymers, **characterised in that** at least one hydrophilically substituted alkyl vinyl ether of the formula I and at least one crosslinking agent conforming to formula II and/or III and/or IV are copolymerised, 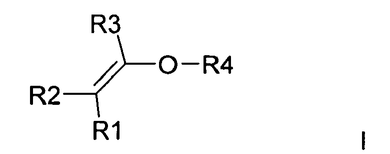 where R1, R2, R3 can be, independently of one another, H or C1 to C6 alkyl, preferably H or -CH₃,
and R4 is a radical which carries at least one hydroxyl group
and 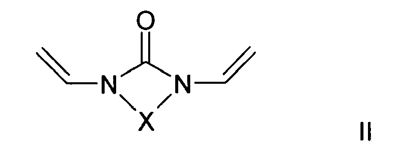 where X is a divalent alkyl radical having 2 to 5 C atoms, in which one or more methylene groups which are not adjacent and are not located in the direct vicinity of N may be replaced by O, C=O, S, S=O, SO₂, NH, NOH or N and one or more H atoms of the methylene groups may be substituted, independently of one another, by hydroxyl groups, C1-C6-alkyl, halogen, NH₂, C5-C10-aryl, NH-(C1-C8)-alkyl, N-(C1-C8)-alkyl₂, C1-C6-alkoxy or C1-C6-alkyl-OH, and 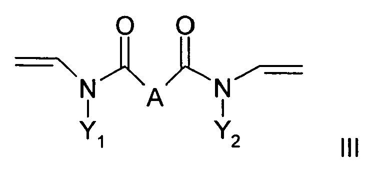 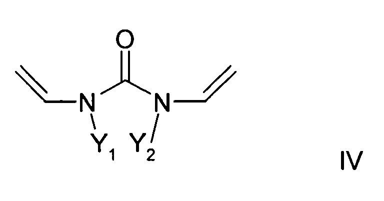 where Y1 and Y2 in formula III and IV are, independently of one another,
C1 to C10 alkyl or cycloalkyl, where one or more non-adjacent methylene groups or methylene groups which are not located in the direct vicinity of N may be replaced by O, C=O, S, S=O, SO₂, NH, NOH or N and one or more H of the methylene groups may be substituted, independently of one another, by hydroxyl groups, C1-C6-alkyl, halogen, NH₂, C5-C10-aryl, NH(C1-C8)alkyl, N(C1-C8)alkyl₂, C1-C6-alkoxy or C1-C6-alkyl-OH,
or C6 to C18 aryl, where one or more H in the aryl system may be substituted, independently of one another, by hydroxyl groups, C1-C6-alkyl, halogen, NH₂, NH(C1-C8)alkyl, N(C1-C8)alkyl₂, C1-C6-alkoxy or C1-C6-alkyl-OH and
A is a divalent alkyl radical having 2 to 5 C atoms, in which one or more non-adjacent methylene groups or methylene groups which are not located in the direct vicinity of N may be replaced by O, C=O, S, S=O, SO₂, NH, NOH or N and one or more H of the methylene groups may be substituted, independently of one another, by hydroxyl groups, C1-C6-alkyl, halogen, NH₂, C5-C10-aryl, NH(C1-C8)alkyl, N(C1-C8)alkyl₂, C1-C6-alkoxy or C1-C6-alkyl-OH.

13. Process according to Claim 12, **characterised in that** use is made of a hydrophilically substituted alkyl vinyl ether of the formula I in which R4 is a straight-chain or branched C1 to C10 alkyl radical, in which one or more non-adjacent methylene groups may be replaced by O, C=O, S, S=O, SO₂, NH, NOH, N and/or in which one or more H atoms may be substituted, independently of one another, by C1-C6-alkyl, C5-C10-aryl, halogen, NH₂, NH(C1-C8)alkyl, N(C1-C8)alkyl₂, C1-C6-alkoxy or C1-C6-alkyl-OH and in which at least one OH group is present either on the C1 to C10 alkyl radical or on a substituent,
or a cycloaliphatic radical having typically 5 to 10 C atoms, in which one or more non-adjacent methylene groups may be replaced by O, C=O, S, S=O, SO₂, NH, NOH, N and/or in which one or more H atoms of the cycloaliphatic radical may be substituted, independently of one another, by C1-C6-alkyl, C5-C10-aryl, halogen, NH₂, NH(C1-C8)alkyl, N(C1-C8)alkyl₂, C1-C6-alkoxy or C1-C6-alkyl-OH, where at least one OH group is present either on the cycloaliphatic ring or on a side chain or substituent, or a
C6 to C18 aryl radical, where one or more H atoms in the aryl radical may be substituted, independently of one another, by hydroxyl groups, C1-C6-alkyl, C5-C10-aryl, halogen, NH₂, NH(C1-C8)alkyl, N(C1-C8)alkyl₂, C1-C6-alkoxy or C1-C6-alkyl-OH, where at least one OH group is present either on the aryl radical or on a side chain or substituent, or a
C5 to C18 heteroaryl radical, where one or more H atoms in the heteroaryl radical may be substituted, independently of one another, by hydroxyl groups, C1-C6-alkyl, C5-C10-aryl, halogen, NH₂, NH(C1-C8)alkyl, N(C1-C8)alkyl₂, C1-C6-alkoxy or C1-C6-alkyl-OH, where at least one OH group is present either on the heteroaryl radical or on a side chain or substituent.

14. Process according to Claim 12 or 13, **characterised in that** a free-radical suspension polymerisation is carried out.

15. Process according to one or more of Claims 12 to 14, **characterised in that** a free-radical suspension polymerisation is carried out in water as suspension medium in the presence of at least one suspension stabiliser and optional further additives, preferably inorganic salts and surface-active compounds.

16. Process according to one or more of Claims 12 to 15, **characterised in that** the temperature during the polymerisation is between 40 and 100°C.

17. Process according to one or more of Claims 12 to 16, **characterised in that** hydrophilically substituted alkyl vinyl ethers and crosslinking agents are employed in a weight ratio between 10:90 and 80:20.

18. Process according to one or more of Claims 12 to 17, **characterised in that** the polymerisation is carried out with addition of one or more porogens.

19. Chromatography column, capillary or cartridge containing a polymer according to one or more of Claims 1 to 11 as sorbent or support material.

20. Use of a polymer according to one or more of Claims 1 to 11 as sorbent in chromatography, as support material for the immobilisation of biologically or catalytically active substances or as support material for a solid-phase synthesis.

## Revendications

1. Polymère basé sur un copolymère comprenant au moins :
a) au moins un éther d'alkyle et de vinyle hydrophiliquement substitué de la formule I : 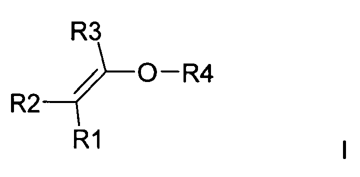 dans laquelle R1, R2, R3 peuvent être, indépendamment les uns des autres, H ou C1 à C6 alkyle,
et R4 est un radical qui est porteur d'au moins un groupe hydroxyle
et
b) au moins un agent de réticulation conforme à Ia/aux formule(s) II et/ou III et/ou IV, 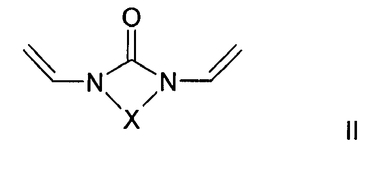 dans laquelle X est un radical alkyle divalent comportant de 2 à 5 atomes de C, où un ou plusieurs groupe(s) méthylène qui ne sont pas adjacents et qui n'est/ne sont pas situé(s) au voisinage direct de N peut/peuvent être remplacé(s) par O, C=O, S, S=O, SO₂, NH, NOH ou N et un ou plusieurs atome(s) de H des groupes méthylène peut/peuvent être substitué(s), indépendamment les uns des autres, par des groupes hydroxyle, C1-C6-alkyle, halogène, NH₂, C5-C10-aryle, NH-(C1-C8)-alkyle, N-(C1-C8)-alkyle₂, C1-C6-alcoxy ou C1-C6-alkyle-OH, et 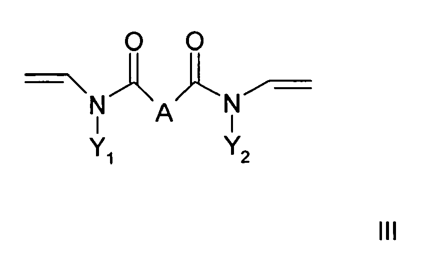 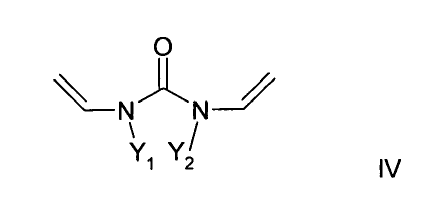 dans lesquelles Y1 et Y2 dans les formules III et IV sont, indépendamment l'un de l'autre,
C1 à C10 alkyle ou cycloalkyle, où un ou plusieurs groupe(s) méthylène non adjacents ou groupe(s) méthylène qui n'est/ne sont pas situé(s) au voisinage direct de N peut/peuvent être remplacé(s) par O, C=O, S, S=O, SO₂, NH, NOH ou N et un ou plusieurs atome(s) de H des groupes méthylène peut/peuvent être substitué(s), indépendamment les uns des autres, par des groupes hydroxyle, C1-C6-alkyle, halogène, NH₂, C5-C10-aryle, NH(C1-C8)alkyle, N(C1-C8)alkyle₂. C1-C6-alcoxy ou C1-C6-alkyle-OH,
ou C6 à C18 aryle, où un ou plusieurs atome(s) de H dans le système aryle peut/peuvent être substitué(s), indépendamment les uns des autres, par des groupes hydroxyle, C1-C6-alkyle, halogène, NH₂, NH(C1-C8)alkyle, N(C1-C8)alkyle₂, C1-C6-alcoxy ou C1-C6-alkyle-OH et
A est un radical alkyle divalent comportant de 2 à 5 atomes de C, où un ou plusieurs groupe(s) méthylène non adjacents ou groupe(s) méthylène qui n'est/ne sont pas situés au voisinage direct de N peut/peuvent être remplacé(s) par O, C=O, S, S=O, SO₂, NH, NOH ou N et un ou plusieurs atome(s) de H des groupes méthylène peut/peuvent être substitué(s), indépendamment les uns des autres, par des groupes hydroxyle, C1-C6-alkyle, halogène, NH₂, C5-C10-aryle, NH(C1-C8)alkyle, N(C1-C8)alkyle₂, C1-C6-alcoxy ou C1-C6-alkyle-OH.

2. Polymère selon la revendication 1, **caractérisé en ce que** R4 dans la formule I
est un radical C1 à C10 alkyle en chaîne droite ou ramifié, où un ou plusieurs groupe(s) méthylène non adjacents peut/peuvent être remplacé(s) par O, C=O, S, S=O, SO₂, NH, NOH, N et/ou où un ou plusieurs atomes de H peut/peuvent être substitué(s), indépendamment les uns des autres, par C1-C6-alkyle, C5-C10-aryle, halogène, NH₂, NH(C1-C8)alkyle, N(C1-C8)-alkyle₂, C1-C6-alcoxy ou C1-C6-alkyle-OH et où au moins un groupe OH est présent soit sur le radical C1 à C10 alkyle, soit sur un substituant,
ou un radical cycloaliphatique comportant typiquement de 5 à 10 atomes de C, où un ou plusieurs groupe(s) méthylène non adjacents peut/peuvent être remplacé(s) par O, C=O, S, S=O, SO₂, NH, NOH, N et/ou où un ou plusieurs atome(s) de H du radical cycloaliphatique peut/peuvent être substitué(s), indépendamment les uns des autres, par C1-C6-alkyle, C5-C10-aryle, halogène, NH₂, NH(C1-C8)alkyle, N(C1-C8)alkyle₂, C1-C6-alcoxy ou C1-C6-alkyle-OH, où au moins un groupe OH est présent soit sur le cycle cycloaliphatique, soit sur une chaîne latérale, soit sur un substituant, ou
un radical C6 à C18 aryle, où un ou plusieurs atome(s) de H dans le radical aryle peut/peuvent être substitué(s), indépendamment les uns des autres, par des groupes hydroxyle, C1-C6-alkyle, C5-C10-aryle, halogène, NH₂, NH(C1-C8)alkyle, N(C1-C8)alkyle₂, C1-C6-alcoxy ou C1-C6-alkyle-OH, où au moins un groupe OH est présent soit sur le radical aryle, soit sur une chaîne latérale, soit sur un substituant, ou
un radical C5 à C18 hétéroaryle, où un ou plusieurs atome(s) de H dans le radical hétéroaryle peut/peuvent être substitué(s), indépendamment les uns des autres, par des groupes hydroxyle, C1-C6-alkyle, C5-C10-aryle, halogène, NH₂, NH(C1-C8)alkyle, N(C1-C8)alkyle₂, C1-C6-alcoxy ou C1-C6-alkyle-OH, où au moins un groupe OH est présent soit sur le radical hétéroaryle, soit sur une chaîne latérale, soit sur un substituant.

3. Polymère selon la revendication 1 ou 2, **caractérisé en ce que** l'éther d'alkyle et de vinyle hydrophiliquement substitué utilisé est un composé de la formule I dans laquelle R4 est un radical qui est porteur d'un groupe hydroxyle.

4. Polymère selon une ou plusieurs des revendications 1 à 3, caractérisé en en ce que l'éther d'alkyle et de vinyle hydrophiliquement substitué utilisé est l'éther monovinylique de 1,2-éthanediol, l'éther monovinylique de 1,3-propanediol, l'éther monovinylique de 1,4-butanediol, l'éther monovinylique de 1,5-pentanediol, l'éther monovinylique de 1,6-hexanediol, l'éther monovinylique de diéthylène glycol ou l'éther monovinylique de cyclohexane-diméthanol.

5. Polymère selon une ou plusieurs des revendications 1 à 4, **caractérisé en ce que** l'agent de réticulation utilisé est divinyléthylèneurée (1,3-divinyl-imidazolin-2-one) ou divinylpropylèneurée (1,3-divinyltétrahydropyrimidin-2-one).

6. Polymère selon une ou plusieurs des revendications 1 à 5, **caractérisé en ce que** le polymère est poreux avec des tailles de pores entre 2 et 200 nm.

7. Polymère selon une ou plusieurs des revendications 1 à 6, **caractérisé en ce que** le polymère est sous la forme de particules présentant un diamètre entre 3 et 300 µm.

8. Polymère selon une ou plusieurs des revendications 1 à 7, **caractérisé en ce que** le polymère a subi une dérivation au moyen d'effecteurs de séparation.

9. Polymère selon une ou plusieurs des revendications 1 à 8, **caractérisé en ce que** le polymère a subi une dérivation au moyen de structures qui ont été fixé au polymère au moyen d'une polymérisation par greffe.

10. Polymère selon une ou plusieurs des revendications 1 à 9, **caractérisé en ce que** le polymère a subi une dérivation au moyen de structures qui ont été fixé au polymère au moyen d'une polymérisation par greffe avec catalyse par cérium(IV).

11. Polymère selon la revendication 9 ou 10, **caractérisé en ce que** les structures sont des copolymères qui ont été produits à partir de deux monomères différents ou plus.

12. Procédé pour la préparation de polymères, **caractérisé en ce qu'**au moins un éther d'alkyle et de vinyle hydrophiliquement substitué de la formule I et au moins un agent de réticulation conforme à Ia/aux formule(s) Il et/ou III et/ou IV sont copolymérisés, 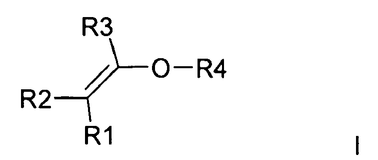 dans laquelle R1, R2, R3 peuvent être, indépendamment les uns des autres, H ou C1 à C6 alkyle, de façon préférable H ou -CH₃,
et R4 est un radical qui est porteur d'au moins un groupe hydroxyle et 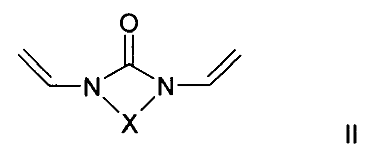 dans laquelle X est un radical alkyle divalent comportant de 2 à 5 atomes de C, où un ou plusieurs groupe(s) méthylène qui ne sont pas adjacents et n'est/ne sont pas situé(s) au voisinage direct de N peut/peuvent être remplacé(s) par O, C=O, S, S=O, SO₂, NH, NOH ou N et un ou plusieurs atome(s) de H des groupes méthylène peut/peuvent être substitué(s), indépendamment les uns des autres, par des groupes hydroxyle, C1-C6-alkyle, halogène, NH₂, C5-C10-aryle, NH-(C1-C8)-alkyle, N-(C1-C8)-alkyle₂, C1-C6-alcoxy ou C1-C6-alkyle-OH, et 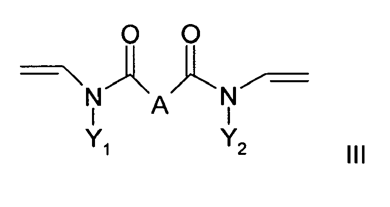 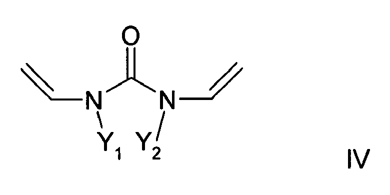 dans lesquelles Y1 et Y2 dans les formules III et IV sont, indépendamment l'un de l'autre,
C1 à C10 alkyle ou cycloalkyle, où un ou plusieurs groupe(s) méthylène non adjacents ou groupe(s) méthylène qui n'est/ne sont pas situé(s) au voisinage direct de N peut/peuvent être remplacé(é)s par O, C=O, S, S=O, SO₂, NH, NOH ou N et un ou plusieurs atome(s) de H des groupes méthylène peut/peuvent être substitué(s), indépendamment les uns des autres, par des groupes hydroxyle, C1-C6-alkyle, halogène, NH₂, C5-C10-aryle, NH(C1-C8)alkyle, N(C1-C8)alkyle₂. C1-C6-alcoxy ou C1-C6-alkyle-OH,
ou C6 à C18 aryle, où un ou plusieurs atome(s) de H dans le système aryle peut/peuvent être substitué(s), indépendamment les uns des autres, par des groupes hydroxyle, C1-C6-alkyle, halogène, NH₂, NH(C1-C8)alkyle, N(C1-C8)alkyle₂, C1-C6-alcoxy ou C1-C6-alkyle-OH et
A est un radical alkyle divalent comportant de 2 à 5 atomes de C, où un ou plusieurs groupe(s) méthylène non adjacents ou groupe(s) méthylène qui n'est/ne sont pas situé(s) au voisinage direct de N peut/peuvent être remplacé(s) par O, C=O, S, S=O, SO₂, NH, NOH ou N et un ou plusieurs atome(s) de H des groupes méthylène peut/peuvent être substitué(s), indépendamment les uns des autres, par des groupes hydroxyle, C1-C6-alkyle, halogène, NH₂, C5-C10-aryle, NH(C1-C8)alkyle, N(C1-C8)alkyle₂, C1-C6-alcoxy ou C1-C6-alkyle-OH.

13. Procédé selon la revendication 12, **caractérisé en ce qu'**est utilisé un éther d'alkyle et de vinyle hydrophiliquement substitué de la formule I dans laquelle R4 est
un radical C1 à C10 alkyle en chaîne droite ou ramifié, où un ou plusieurs groupe(s) méthylène non adjacents peut/peuvent être remplacé(s) par O, C=O, S, S=O, SO₂, NH, NOH, N et/ou où un ou plusieurs atome(s) de H peut/peuvent être substitué(s), indépendamment les uns des autres, par C1-C6-alkyle, C5-C10-aryle, halogène, NH₂, NH(C1-C8)alkyle, N(C1-C8)-alkyle₂, C1-C6-alcoxy ou C1-C6-alkyle-OH et où au moins un groupe OH est présent soit sur le radical C1 à C10 alkyle, soit sur un substituant, ou
un radical cycloaliphatique comportant typiquement de 5 à 10 atomes de C, où un ou plusieurs groupe(s) méthylène non adjacents peut/peuvent être remplacé(s) par O, C=O, S, S=O, SO₂, NH, NOH, N et/ou où un ou plusieurs atome(s) de H du radical cycloaliphatique peut/peuvent être substitué(s), indépendamment les uns des autres, par C1-C6-alkyle, C5-C10-aryle, halogène, NH₂, NH(C1-C8)alkyle, N(C1-C8)alkyle₂, C1-C6-alcoxy ou C1-C6-alkyle-OH, où au moins un groupe OH est présent soit sur le cycle cycloaliphatique, soit sur une chaîne latérale, soit sur un substituant, ou
un radical C6 à C18 aryle, où un ou plusieurs atome(s) de H dans le radical aryle peut/peuvent être substitué(s), indépendamment les uns des autres, par des groupes hydroxyle, C1-C6-alkyle, C5-C10-aryle, halogène, NH₂, NH(C1-C8)alkyle, N(C1-C8)alkyle₂, C1-C6-alcoxy ou C1-C6-alkyle-OH, où au moins un groupe OH est présent soit sur le radical aryle, soit sur une chaîne latérale, soit sur un substituant, ou
un radical C5 à C18 hétéroaryle, où un ou plusieurs atome(s) de H dans le radical hétéroaryle peut/peuvent être substitué(s), indépendamment les uns des autres, par des groupes hydroxyle, C1-C6-alkyle, C5-C10-aryle, halogène, NH₂, NH(C1-C8)alkyle, N(C1-C8)alkyle₂, C1-C6-alcoxy ou C1-C6-alkyle-OH, où au moins un groupe OH est présent soit sur le radical hétéroaryle, soit sur une chaîne latérale, soir sur un substituant.

14. Procédé selon la revendication 12 ou 13, **caractérisé en ce qu'**une polymérisation par suspension de radical libre est mise en oeuvre.

15. Procédé selon une ou plusieurs des revendications 12 à 14, **caractérisé en ce qu'**une polymérisation par suspension de radical libre est mise en oeuvre dans l'eau en tant que milieu de suspension en présence d'au moins un stabiliseur de suspension et en option, d'autres additifs, de façon préférable des sels inorganiques et des composés tensio-actifs.

16. Procédé selon une ou plusieurs des revendications 12 à 15, **caractérisé en ce que** la température pendant la polymérisation est entre 40 et 100°C.

17. Procédé selon une ou plusieurs des revendications 12 à 16, **caractérisé en ce que** des éthers d'alkyle et de vinyle hydrophiliquement substitués et des agents de réticulation sont utilisés selon un rapport en poids entre 10:90 et 80:20.

18. Procédé selon une ou plusieurs des revendications 12 à 17, **caractérisé en ce que** la polymérisation est mise en oeuvre moyennant l'ajout d'un ou de plusieurs porogène(s).

19. Colonne, capillaire ou cartouche de chromatographie contenant un polymère selon une ou plusieurs des revendications 1 à 11 en tant que sorbant ou matériau de support.

20. Utilisation d'un polymère selon une ou plusieurs des revendications 1 à 11 en tant que sorbant en chromatographie, en tant que matériau de support pour l'immobilisation de substances biologiquement ou catalytiquement actives ou en tant que matériau de support pour une synthèse en phase solide.
